# EUROPEAN PATENT APPLICATION

(11) **EP 4 462 908 A1**
(43) Date of publication of application: **13.11.2024**
(21) Application number: 22923436.4
(22) Date of filing: 25.11.2022
(51) Int. Cl.: H04W 72/04

(54) **COMMUNICATION METHOD AND APPARATUS**

(30) Priority: 30.01.2022 CN 202210114360
(71) Applicant: Huawei Technologies Co., Ltd., Shenzhen, Guangdong 518129 (CN)
(72) Inventor: SUN, Haiyang, Shenzhen, Guangdong 518129 (CN)
(74) Representative: Gill Jennings & Every LLP
(86) International application number: PCT/CN2022/134383
(87) International publication number: WO 2023/142644

(57) **Abstract**

This application provides a communications method and an apparatus. According to the communications method in this application, a target arrival time point of a first data packet in a QoS flow may be determined, and a waiting delay corresponding to the target arrival time point is less than or equal to a preset threshold. Therefore, according to the method in this application, a queuing delay of a data packet at an access network device or a terminal device can be reduced. In addition, in a process of determining the target arrival time point according to the communications method in this application, a preset requirement of the QoS flow or a preset requirement of a service flow corresponding to the QoS flow is considered. Therefore, according to the method in this application, determining the target arrival time point through a plurality of times of negotiation can be avoided. This reduces signaling overheads, reduces time consumed for determining the target arrival time point, and improves communications efficiency.

## Description

This application claims priority to Chinese Patent Application No. 202210114360.9, filed with the China National Intellectual Property Administration on January 30, 2022 and entitled "COMMUNICATIONS METHOD AND APPARATUS", which is incorporated herein by reference in its entirety.

### TECHNICAL FIELD

This application relates to the field of communications technologies, and more specifically, to a communications method and an apparatus.

### BACKGROUND

Currently, a 3rd generation partnership project (the 3rd generation partnership project, 3GPP) network and a time sensitive network can interwork with each other.

However, in a downlink data packet transmission process, a data packet may be buffered/queued at an access network device for a long time due to impact of a time point at which the data packet arrives at the access network device. In an uplink data packet transmission process, a data packet may be buffered/queued at a terminal device for a long time due to impact of a time point at which the data packet arrives at the terminal device. Therefore, if the data packet is buffered or queued at the access network device or the terminal device for a long time, requirements of some low-delay services may not be met.

### SUMMARY

This application provides a communications method and an apparatus, so that a queuing delay of a data packet at an access network device or a terminal device can be reduced.

According to a first aspect, a communications method is provided, including:
An access network device receives information about a plurality of first arrival time points of a first data packet in a quality of service QoS flow from a session management network element. In a downlink direction, the plurality of the first arrival time points are a plurality of time points at which the first data packet arrives at an ingress of the access network device. In an uplink direction, the plurality of first arrival time points are a plurality of time points at which the first data packet arrives at an egress of a terminal device. The access network device determines a target arrival time point based on the information about the plurality of first arrival time points. The access network device sends the target arrival time point.

According to the method in this application, the access network device determines the target arrival time point based on the information about the plurality of arrival time points, so that determining the target arrival time point through a plurality of times of negotiation can be avoided. This reduces signaling overheads, reduces time consumed for determining the target arrival time point, and improves communications efficiency.

With reference to the first aspect, in some implementations of the first aspect, the plurality of first arrival time points correspond to a plurality of second arrival time points of a first data packet of a service, the QoS flow corresponds to the service, the plurality of second arrival time points meet a preset requirement of the service, and the preset requirement includes one or more of the following:
a requirement on an arrival time interval of a data packet of the service, a requirement on a sending sequence of the service, and a requirement on an adjustment granularity of an arrival time point of the data packet of the service.

With reference to the first aspect, in some implementations of the first aspect, a waiting delay corresponding to the target arrival time point is less than or equal to a preset threshold. In the uplink direction, the waiting delay corresponding to the target arrival time point is a waiting delay at the terminal device. In the downlink direction, the waiting delay corresponding to the target arrival time point is a waiting delay at the access network device.

According to the method in this application, the waiting delay corresponding to the target arrival time point is less than or equal to the preset threshold. Therefore, a queuing delay of a data packet at the access network device or the terminal device can be reduced using the method in this application.

With reference to the first aspect, in some implementations of the first aspect, the target arrival time point is a time point with a smallest waiting delay in the plurality of first arrival time points.

With reference to the first aspect, in some implementations of the first aspect, the plurality of first arrival time points include a preferential arrival time point and at least one candidate arrival time point. Apriority of the preferential arrival time point is higher than a priority of the at least one candidate arrival time point. That the access network device determines a target arrival time point includes:
When a waiting delay corresponding to the preferential arrival time point is less than or equal to the preset threshold, the access network device determines the preferential arrival time point as the target arrival time point; or when a waiting delay corresponding to the preferential arrival time point is greater than the preset threshold, the access network device determines the target arrival time point based on the at least one candidate arrival time point.

With reference to the first aspect, in some implementations of the first aspect, the at least one candidate arrival time point has a priority sequence. That the access network device determines the target arrival time point based on the at least one candidate arrival time point includes:
The access network device determines the target arrival time point based on the priority sequence and the at least one candidate arrival time point.

With reference to the first aspect, in some implementations of the first aspect, when the waiting delay corresponding to the preferential arrival time point is greater than the preset threshold, the target arrival time point is a time point with a smallest waiting delay in the at least one candidate arrival time point.

With reference to the first aspect, in some implementations of the first aspect, the information about the plurality of first arrival time points is information about an arrival time interval.

That the access network device determines a target arrival time point includes:
The access network device determines the target arrival time point based on the arrival time interval.

With reference to the first aspect, in some implementations of the first aspect, that the access network device determines a target arrival time point includes:
The access network device determines the target arrival time point based on an air interface scheduling status.

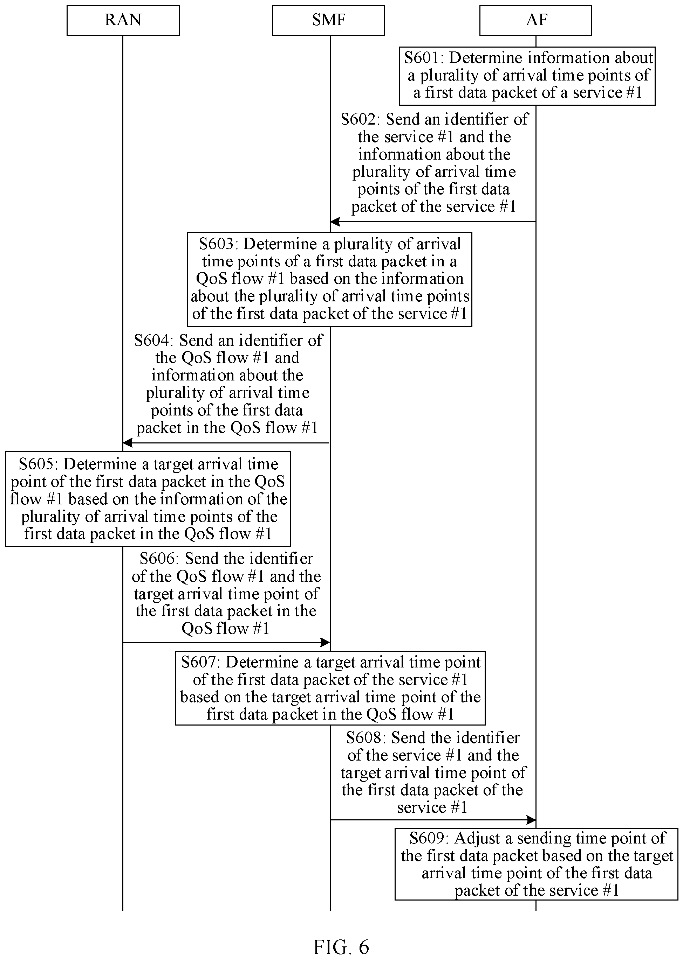

For more details of the communications method provided in the first aspect, refer to descriptions in FIG. 6.

According to a second aspect, a communications method is provided, including:
An application function network element determines information about a plurality of arrival time points of a first data packet of a service. The plurality of arrival time points meet a preset requirement of the service. The preset requirement includes one or more of the following: a requirement on an arrival time interval of a data packet of the service, a requirement on a sending sequence of the service, and a requirement on an adjustment granularity of an arrival time point of the data packet of the service. In a downlink direction, the plurality of arrival time points are a plurality of time points at which the first data packet arrives at a network-side time sensitive network translator NW-TT. In an uplink direction, the plurality of arrival time points are a plurality of time points at which the first data packet arrives at a device-side time sensitive network translator DS-TT. The application function network element sends identification information of the service and the information about the plurality of arrival time points. The application function network element receives the identification information of the service and a target arrival time point from a session management network element. The information about the plurality of arrival time points includes the target arrival time point. The application function network element adjusts a sending time point of the first data packet based on the target arrival time point.

According to the method in this application, because the application function network element provides the information about the plurality of arrival time points, and the plurality of arrival time points meet the preset requirement of the service, determining the target arrival time point through a plurality of times of negotiation can be avoided. This reduces signaling overheads, reduces time consumed for determining the target arrival time point, and improves communications efficiency.

With reference to the second aspect, in some implementations of the second aspect, a waiting delay corresponding to the target arrival time point is less than or equal to a preset threshold. In the uplink direction, the waiting delay corresponding to the target arrival time point is a waiting delay at a terminal device. In the downlink direction, the waiting delay corresponding to the target arrival time point is a waiting delay at an access network device.

According to the method in this application, the waiting delay corresponding to the target arrival time point is less than or equal to the preset threshold. Therefore, a queuing delay of a data packet at the access network device or the terminal device can be reduced using the method in this application.

With reference to the second aspect, in some implementations of the second aspect, the plurality of arrival time points include a preferential arrival time point and at least one candidate arrival time point, and a priority of the preferential arrival time point is higher than a priority of the at least one candidate arrival time point.

With reference to the second aspect, in some implementations of the second aspect, the at least one candidate arrival time point has a priority sequence.

With reference to the second aspect, in some implementations of the second aspect, the information about the plurality of arrival time points is information about an arrival time interval.

For more details of the communications method provided in the second aspect, refer to descriptions in FIG. 6.

According to a third aspect, a communications method is provided, including:
A session management network element receives a preset requirement of a service from an application function network element. The preset requirement includes one or more of the following: a requirement on an arrival time interval of a data packet of the service, a requirement on a sending sequence of the service, and a requirement on an adjustment granularity of an arrival time point of the data packet of the service. The session management network element receives a plurality of arrival time points of a first data packet in a quality of service QoS flow from an access network device. The service corresponds to the QoS flow. The session management network element determines a target arrival time point of the first data packet in the QoS flow based on the plurality of arrival time points and the preset requirement of the service.

In the foregoing method, the session management network element determines the target arrival time point based on the preset requirement of the service obtained from the application function network element and the plurality of arrival time points obtained from the access network device. The target arrival time point meets the preset requirement of the service. Therefore, according to the method provided in this application, determining the target arrival time point through a plurality of times of negotiation can be avoided. This reduces signaling overheads, reduces time consumed for determining the target arrival time point, and improves communications efficiency.

With reference to the third aspect, in some implementations of the third aspect, the target arrival time point of the first data packet in the QoS flow meets the preset requirement of the QoS flow, and the preset requirement of the QoS flow corresponds to the preset requirement of the service.

With reference to the third aspect, in some implementations of the third aspect, a waiting delay corresponding to the target arrival time point of the first data packet in the QoS flow is less than or equal to a preset threshold. In an uplink direction, the waiting delay corresponding to the target arrival time point of the first data packet in the QoS flow is a waiting delay at a terminal device. In a downlink direction, the waiting delay corresponding to the target arrival time point of the first data packet in the QoS flow is a waiting delay at the access network device.

According to the method in this application, the waiting delay corresponding to the target arrival time point is less than or equal to the preset threshold. Therefore, a queuing delay of a data packet at the access network device or the terminal device can be reduced using the method in this application.

With reference to the third aspect, in some implementations of the third aspect, the plurality of arrival time points have a priority sequence. That the session management network element determines a target arrival time point of the first data packet in the QoS flow includes:
The session management network element determines the target arrival time point of the first data packet in the QoS flow based on the priority sequence.

With reference to the third aspect, in some implementations of the third aspect, the method further includes: The session management network element sends identification information of the service and a target arrival time point of a first data packet of the service. The target arrival time point of the first data packet in the QoS flow corresponds to the target arrival time point of the first data packet of the service.

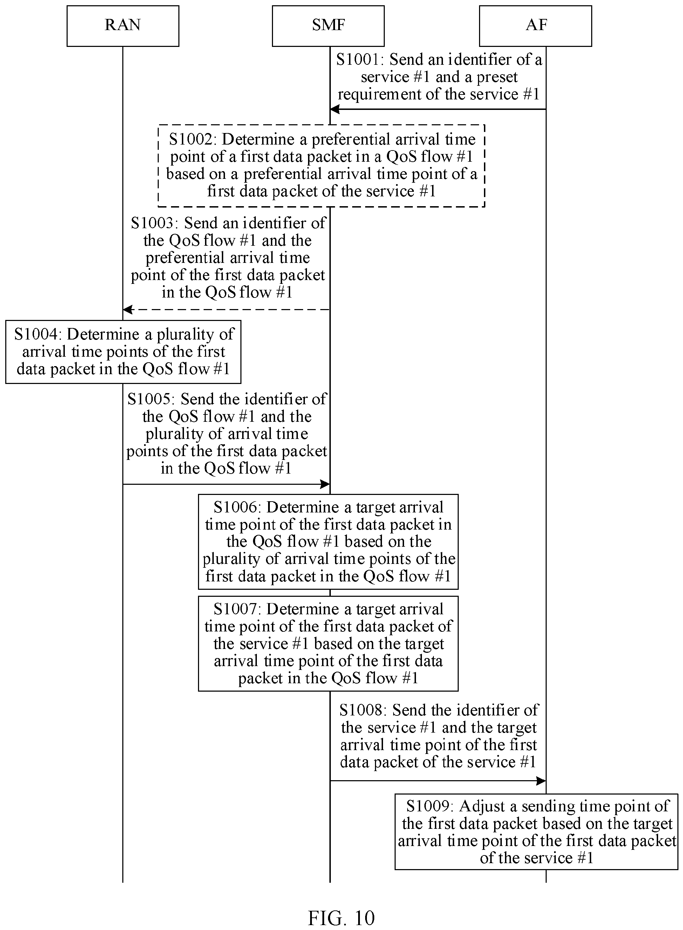

For more details of the communications method provided in the third aspect, refer to descriptions in FIG. 10.

According to a fourth aspect, a communications method is provided, including:
An access network device determines a plurality of arrival time points of a first data packet in a quality of service QoS flow. In a downlink direction, the plurality of arrival time points are a plurality of time points of arriving at an ingress of the access network device. In an uplink direction, the plurality of arrival time points are a plurality of time points of arriving at an egress of a terminal device. The access network device sends an identifier of the QoS flow and the plurality of arrival time points to a session management network element.

With reference to the fourth aspect, in some implementations of the fourth aspect, the method further includes:
The access network device receives the identifier of the QoS flow and a preferential arrival time point of the first data packet in the QoS flow that are from the session management network element. That an access network device determines a plurality of arrival time points includes:

When a waiting delay corresponding to the preferential arrival time point is greater than a preset threshold, the access network device determines the plurality of arrival time points.

With reference to the fourth aspect, in some implementations of the fourth aspect, waiting delays respectively corresponding to the plurality of arrival time points each are less than or equal to the preset threshold. In the uplink direction, the waiting delays respectively corresponding to the plurality of arrival time points are waiting delays at the terminal device. In the downlink direction, the waiting delays respectively corresponding to the plurality of arrival time points are waiting delays at the access network device.

With reference to the fourth aspect, in some implementations of the fourth aspect, that an access network device determines a plurality of arrival time points includes:
The access network device determines the plurality of arrival time points based on an air interface scheduling status.

With reference to the fourth aspect, in some implementations of the fourth aspect, the plurality of arrival time points have a priority sequence.

For more details of the communications method provided in the fourth aspect, refer to descriptions in FIG. 10.

According to a fifth aspect, a communications method is provided, including:
An access network device receives a preset requirement of a quality of service QoS flow from a session management network element. The preset requirement includes one or more of the following: a requirement on an arrival time interval of a data packet in the QoS flow, a requirement on a sending sequence of the QoS flow, and a requirement on an adjustment granularity of an arrival time point of the data packet in the QoS flow. The access network device determines a target arrival time point of a first data packet in the QoS flow. The target arrival time point meets the preset requirement. The access network device sends the target arrival time point.

According to the method in this application, the target arrival time point determined by the access network device meets the preset requirement. Therefore, determining the target arrival time point through a plurality of times of negotiation can be avoided. This reduces signaling overheads, reduces time consumed for determining the target arrival time point, and improves communications efficiency.

With reference to the fifth aspect, in some implementations of the fifth aspect, the method further includes:
The access network device receives a preferential arrival time point of the first data packet in the QoS flow from the session management network element. In a downlink direction, the preferential arrival time point is a preferential time point of arriving at an ingress of the access network device. In an uplink direction, the preferential arrival time point is a preferential time point of arriving at an egress of a terminal device. That the access network device determines a target arrival time point includes:
When a waiting delay corresponding to the preferential arrival time point is greater than a preset threshold, the access network device determines the target arrival time point. A waiting delay corresponding to the target arrival time point is less than or equal to the preset threshold. In the uplink direction, the waiting delay corresponding to the preferential arrival time point and the waiting delay corresponding to the target arrival time point are waiting delays at the terminal device. In the downlink direction, the waiting delay corresponding to the preferential arrival time point and the waiting delay corresponding to the target arrival time point are waiting delays at the access network device.

According to the method in this application, the waiting delay corresponding to the target arrival time point is less than or equal to the preset threshold. Therefore, a queuing delay of a data packet at the access network device or the terminal device can be reduced using the method in this application.

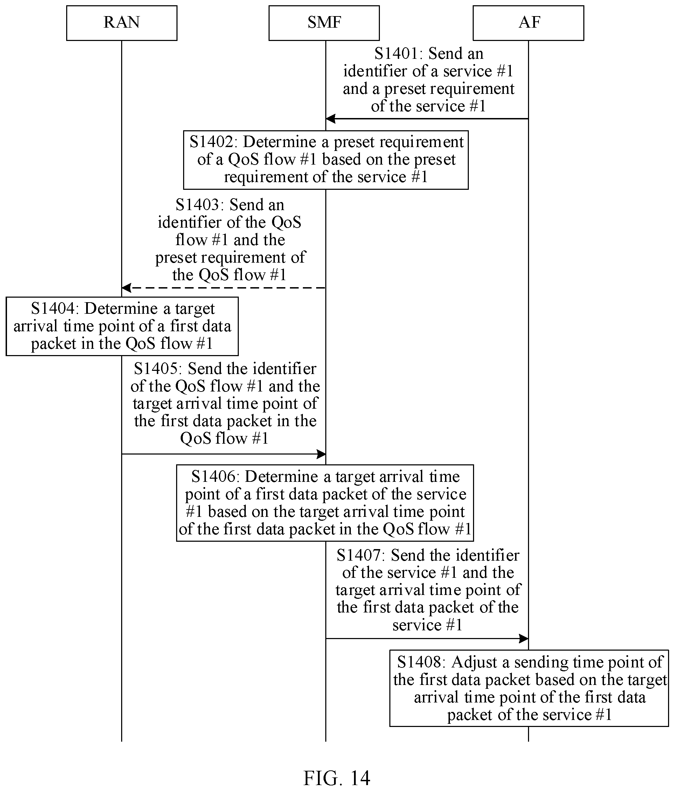

For more details of the communications method provided in the fifth aspect, refer to descriptions in FIG. 14.

According to a sixth aspect, a communications apparatus is provided, including a transceiver unit and a processing unit connected to the transceiver unit.

The transceiver unit is configured to receive an identifier of a quality of service QoS flow and information about a plurality of arrival time points of a first data packet in the QoS flow that are from a session management network element. In a downlink direction, the plurality of arrival time points are a plurality of time points at which the first data packet arrives at an ingress of an access network device. In an uplink direction, the plurality of arrival time points are a plurality of time points at which the first data packet arrives at an egress of a terminal device. The processing unit is configured to determine a target arrival time point based on the information about the plurality of arrival time points. The transceiver unit is configured to send the identifier of the QoS flow and the target arrival time point.

With reference to the sixth aspect, in some implementations of the sixth aspect, a waiting delay corresponding to the target arrival time point is less than or equal to a preset threshold. In the uplink direction, the waiting delay corresponding to the target arrival time point is a waiting delay at the terminal device. In the downlink direction, the waiting delay corresponding to the target arrival time point is a waiting delay at the access network device.

With reference to the sixth aspect, in some implementations of the sixth aspect, the target arrival time point is a time point with a smallest waiting delay in the plurality of arrival time points.

With reference to the sixth aspect, in some implementations of the sixth aspect, the plurality of arrival time points include a preferential arrival time point and at least one candidate arrival time point. A priority of the preferential arrival time point is higher than a priority of the at least one candidate arrival time point. When a waiting delay corresponding to the preferential arrival time point is less than or equal to the preset threshold, the processing unit is configured to determine the preferential arrival time point as the target arrival time point; or when a waiting delay corresponding to the preferential arrival time point is greater than the preset threshold, the processing unit is configured to determine the target arrival time point based on the at least one candidate arrival time point.

With reference to the sixth aspect, in some implementations of the sixth aspect, the at least one candidate arrival time point has a priority sequence. The processing unit is configured to determine the target arrival time point based on the priority sequence and the at least one candidate arrival time point.

With reference to the sixth aspect, in some implementations of the sixth aspect, when the waiting delay corresponding to the preferential arrival time point is greater than the preset threshold, the target arrival time point is a time point with a smallest waiting delay in the at least one candidate arrival time point.

With reference to the sixth aspect, in some implementations of the sixth aspect, the information about the plurality of arrival time points is information about an arrival time interval. The processing unit is configured to determine the target arrival time point based on the arrival time interval.

With reference to the sixth aspect, in some implementations of the sixth aspect, the processing unit is configured to determine the target arrival time point based on an air interface scheduling status.

According to a seventh aspect, a communications apparatus is provided, including a transceiver unit and a processing unit connected to the transceiver unit.

The processing unit is configured to determine information about a plurality of arrival time points of a first data packet of a service. The plurality of arrival time points meet a preset requirement of the service. The preset requirement includes one or more of the following: a requirement on an arrival time interval of a data packet of the service, a requirement on a sending sequence of the service, and a requirement on an adjustment granularity of an arrival time point of the data packet of the service. In a downlink direction, the plurality of arrival time points are a plurality of time points at which the first data packet arrives at a network-side time sensitive network translator NW-TT. In an uplink direction, the plurality of arrival time points are a plurality of time points at which the first data packet arrives at a device-side time sensitive network translator DS-TT. The transceiver unit is configured to send identification information of the service and the information about the plurality of arrival time points. The transceiver unit is configured to receive the identification information of the service and a target arrival time point that are from a session management network element. The information about the plurality of arrival time points includes the target arrival time point. The processing unit is configured for a network element to adjust a sending time point of the first data packet based on the target arrival time point.

With reference to the seventh aspect, in some implementations of the seventh aspect, a waiting delay corresponding to the target arrival time point is less than or equal to a preset threshold. In the uplink direction, the waiting delay corresponding to the target arrival time point is a waiting delay at a terminal device. In the downlink direction, the waiting delay corresponding to the target arrival time point is a waiting delay at an access network device.

With reference to the seventh aspect, in some implementations of the seventh aspect, the plurality of arrival time points include a preferential arrival time point and at least one candidate arrival time point. A priority of the preferential arrival time point is higher than a priority of the at least one candidate arrival time point.

With reference to the seventh aspect, in some implementations of the seventh aspect, the at least one candidate arrival time point has a priority sequence.

With reference to the seventh aspect, in some implementations of the seventh aspect, the information about the plurality of arrival time points is information about an arrival time interval.

According to an eighth aspect, a communications apparatus is provided, including a transceiver unit and a processing unit connected to the transceiver unit.

The transceiver unit is configured to receive a preset requirement of a service from an application function network element. The preset requirement includes one or more of the following: a requirement on an arrival time interval of a data packet of the service, a requirement on a sending sequence of the service, and a requirement on an adjustment granularity of an arrival time point of the data packet of the service. The transceiver unit is configured to receive an identifier of a quality of service QoS flow and a plurality of arrival time points of a first data packet in the QoS flow that are from an access network device. The service corresponds to the QoS flow. The processing unit is configured to determine a target arrival time point of the first data packet in the QoS flow based on the plurality of arrival time points and the preset requirement of the service.

With reference to the eighth aspect, in some implementations of the eighth aspect, the target arrival time point of the first data packet in the QoS flow meets a preset requirement of the QoS flow, and the preset requirement of the QoS flow corresponds to the preset requirement of the service.

With reference to the eighth aspect, in some implementations of the eighth aspect, a waiting delay corresponding to the target arrival time point of the first data packet in the QoS flow is less than or equal to a preset threshold. In an uplink direction, the waiting delay corresponding to the target arrival time point of the first data packet in the QoS flow is a waiting delay at a terminal device. In a downlink direction, the waiting delay corresponding to the target arrival time point of the first data packet in the QoS flow is a waiting delay at the access network device.

With reference to the eighth aspect, in some implementations of the eighth aspect, the plurality of arrival time points have a priority sequence. The processing unit is configured to determine the target arrival time point of the first data packet in the QoS flow based on the priority sequence.

With reference to the eighth aspect, in some implementations of the eighth aspect, the transceiver unit is configured to send the identification information of the service and a target arrival time point of a first data packet of the service. The target arrival time point of the first data packet in the QoS flow corresponds to the target arrival time point of the first data packet of the service.

According to a ninth aspect, a communications apparatus is provided, including a transceiver unit and a processing unit connected to the transceiver unit.

The processing unit is configured to determine a plurality of arrival time points of a first data packet in a quality of service QoS flow. In a downlink direction, the plurality of arrival time points are a plurality of time points of arriving at an ingress of an access network device. In an uplink direction, the plurality of arrival time points are a plurality of time points of arriving at an egress of a terminal device. The transceiver unit is configured to send an identifier of the QoS flow and the plurality of arrival time points to a session management network element.

With reference to the ninth aspect, in some implementations of the ninth aspect, the transceiver unit is configured to receive the identifier of the QoS flow and a preferential arrival time point of the first data packet in the QoS flow that are from the session management network element. When a waiting delay corresponding to the preferential arrival time point is greater than a preset threshold, the processing unit is configured to determine the plurality of arrival time points.

With reference to the ninth aspect, in some implementations of the ninth aspect, waiting delays respectively corresponding to the plurality of arrival time points each are less than or equal to the preset threshold. In the uplink direction, the waiting delays respectively corresponding to the plurality of arrival time points are waiting delays at the terminal device. In the downlink direction, the waiting delays respectively corresponding to the plurality of arrival time points are waiting delays at the access network device.

With reference to the ninth aspect, in some implementations of the ninth aspect, the processing unit is configured to determine the plurality of arrival time points based on an air interface scheduling status.

With reference to the ninth aspect, in some implementations of the ninth aspect, the plurality of arrival time points have a priority sequence.

According to a tenth aspect, a communications apparatus is provided, including a transceiver unit and a processing unit connected to the transceiver unit.

The transceiver unit is configured to receive an identifier of a quality of service QoS flow and a preset requirement of the QoS flow that are from a session management network element. The preset requirement includes one or more of the following: a requirement on an arrival time interval of a data packet in the QoS flow, a requirement on a sending sequence of the QoS flow, and a requirement on an adjustment granularity of an arrival time point of the data packet in the QoS flow. The processing unit is configured to determine a target arrival time point of a first data packet in the QoS flow. The target arrival time point meets the preset requirement. The transceiver unit is configured to send the identifier of the QoS flow and the target arrival time point.

With reference to the tenth aspect, in some implementations of the tenth aspect, the transceiver unit is configured to receive a preferential arrival time point of the first data packet in the QoS flow from the session management network element. In a downlink direction, the preferential arrival time point is a preferential time point of arriving at an ingress of an access network device. In an uplink direction, the preferential arrival time point is a preferential time point of arriving at an egress of a terminal device. When a waiting delay corresponding to the preferential arrival time point is greater than a preset threshold, the processing unit is configured to determine the target arrival time point. Awaiting delay corresponding to the target arrival time point is less than or equal to the preset threshold. In the uplink direction, the waiting delay corresponding to the preferential arrival time point and the waiting delay corresponding to the target arrival time point are waiting delays at the terminal device. In the downlink direction, the waiting delay corresponding to the preferential arrival time point and the waiting delay corresponding to the target arrival time point are waiting delays at the access network device.

According to an eleventh aspect, a communications device is provided, including a communications interface and a processor. When the communications device runs, the processor executes a computer program or instructions stored in a memory, to enable the communications device to perform the method in any one of the possible implementations of the first aspect to the fifth aspect. The memory may be located in the processor, or may be implemented using a chip independent of the processor. This is not specifically limited in this application.

According to a twelfth aspect, a computer-readable storage medium is provided, including a computer program. When the computer program is run on a computer, the computer is enabled to perform the method in any one of the possible implementations of the first aspect to the fifth aspect.

According to a thirteenth aspect, a chip is provided. A processing circuit is disposed on the chip. The processing circuit is configured to perform the method in any one of the possible implementations of the first aspect to the fifth aspect.

According to a fourteenth aspect, a computer program product is provided. The computer program product includes a computer program (which may also be referred to as code or instructions). When the computer program is run, a computer is enabled to perform the method in any one of the possible implementations of the first aspect to the fifth aspect.

According to a fifteenth aspect, a communications system is provided. The communications system includes an access network device and a session management network element.

The access network device is configured to perform the method in any one of the possible implementations of the first aspect.

Alternatively, the session management network element is configured to perform the method in any one of the possible implementations of the third aspect; and the access network device is configured to perform the method in any one of the possible implementations of the fourth aspect.

Alternatively, the access network device is configured to perform the method in any one of the possible implementations of the fifth aspect.

### BRIEF DESCRIPTION OF DRAWINGS

FIG. 1 shows a network model of a TSN;
FIG. 2 shows an architecture of a system to which embodiments of this application are applicable;
FIG. 3 shows a downlink packet transmission scenario;
FIG. 4 shows an architecture of a system to which embodiments of this application are applicable;
FIG. 5 is a schematic diagram of a background technology of this application;
FIG. 6 is a schematic interaction diagram of an example of a method according to this application;
FIG. 7 is a schematic diagram of a related example according to this application;
FIG. 8 is a schematic diagram of a related example according to this application;
FIG. 9 is a schematic diagram of a related example according to this application;
FIG. 10 is a schematic interaction diagram of an example of a method according to this application;
FIG. 11 is a schematic diagram of a related example according to this application;
FIG. 12 is a schematic diagram of a related example according to this application;
FIG. 13 is a schematic diagram of a related example according to this application;
FIG. 14 is a schematic interaction diagram of an example of a method according to this application;
FIG. 15 is a schematic block diagram of a communications apparatus according to this application; and
FIG. 16 is a schematic block diagram of a communications device according to this application.

### DESCRIPTION OF EMBODIMENTS

The technical solutions in embodiments of this application are applicable to various communications systems, for example, a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communications system, a 5th generation (5th Generation, 5G) system or a new radio (new radio, NR), or a future 6th generation (6th Generation, 6G) system.

For ease of understanding, terms in this application are first described.

### 1. Terminal device

A terminal device may be user equipment (user equipment, LTE), an access terminal, a subscriber unit, a subscriber station, a mobile station, a remote station, a remote terminal, a mobile device, a user terminal, a terminal, a wireless communications device, a user agent, or a user apparatus. Alternatively, the terminal device may be a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communications function, a computing device, another processing device connected to a wireless modem, a vehicle-mounted device, a wearable device, a terminal device in a 5G network, a terminal device in a future 6G network, a terminal device in a future evolved public land mobile network (public land mobile network, PLMN), or the like. This is not limited in embodiments of this application.

### 2. Radio access network device

A radio access network device may be a base station (base transceiver station, BTS) in a GSM system or CDMA system, or may be a base station (NodeB, NB) in a WCDMA system, or may be an evolved NodeB (evolved NodeB, eNB, or eNodeB) in an LTE system, or may be a radio controller in a cloud radio access network (cloud radio access network, CRAN) scenario, or the network device may be a relay station, an access point, a vehicle-mounted device, a wearable device, a radio access network (radio access network, RAN) device in a 5G network, or a radio access network device in a future 6G network, or the like. This is not limited in embodiments of this application.

### 3. User plane network element

A user plane network element may be a user plane function (user plane function, UPF) network element in a 5G architecture, and the UPF may be responsible for processing a user packet, for example, forwarding and charging. In a future communications system (for example, a 6G or another communications system), the user plane network element may still be the UPF network element or have another name. This is not limited in this application.

### 4. Mobility management network element

A mobility management network element is responsible for access and mobility management of UE in a mobile network. The mobility management network element may be an access and mobility management entity (access and mobility management function, AMF) in 5G. The AMF may be responsible for user location update, registration of a user with a network, user switching, access and mobility management of UE, selection of a session management network element, and the like. The AMF may be an intermediate network element to transmit a session management message between the UE and the session management network element. In a future communications system (for example, a 6G or another communications system), the mobility network element may still be the AMF network element or have another name. This is not limited in this application.

### 5. Session management network element

A session management network element is configured to manage user session creation and deletion, and maintain a session context. For example, in a 5G network, the session management network element may be a session management function (session management function, SMF) network element. It should be understood that, in a future communications system, the session management network element may still be the SMF network element or have another name. This is not limited in this application.

### 6. Policy control network element

A policy control network element may be responsible for a policy control decision and flow-based charging control. Specifically, the policy control network element may be responsible for providing policies such as a quality of service (quality of service, QoS) policy and a slice selection policy for a mobility management network element (such as an AMF) and a session management network element (such as an SMF). For example, in a 5G network, the policy control network element may be a policy control function (policy control function, PCF) network element. It should be understood that, in a future communications system, the policy control network element may still be the PCF network element or have another name. This is not limited in this application.

### 7. Application function network element

An application function network element is configured to provide various services. For example, in a 5G network, the application function network element may be an application function (application function, AF) network element. It should be understood that, in a future communications system, the application function network element may still be the AF network element or have another name. This is not limited in this application.

### 8. Network exposure network element

The network exposure network element is responsible for managing all external applications that expose network data, to ensure security of the external applications to a 3GPP network. For example, in a 5G network, the network exposure network element may be a network exposure function (network exposure function, NEF) network element. It should be understood that, in a future communications system, the network exposure network element may still be the NEF network element or have another name. This is not limited in this application.

In a conventional Ethernet, when a large quantity of data packets instantaneously arrive at a forwarding port, problems of a long forwarding delay or a packet loss may be caused. Therefore, the conventional Ethernet cannot provide a service with high reliability and a guaranteed transmission delay, and cannot meet requirements of fields such as vehicle control and the industrial internet. On this basis, a time sensitive network (time sensitive network, TSN) emerges. The TSN network can ensure reliability of data transmission of time sensitive services and a predictable end-to-end transmission delay.

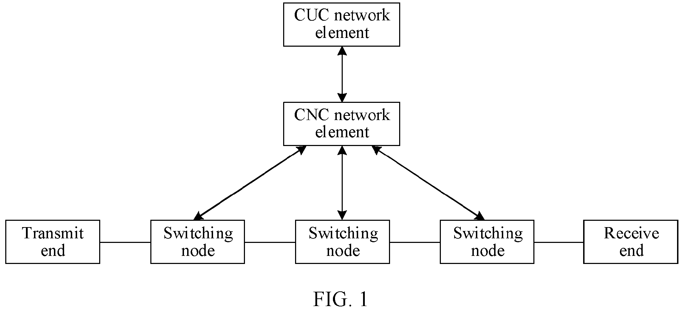

FIG. 1 shows a network model of a TSN, including a centralized user configuration (centralized user configuration, CUC) network element, a centralized network configuration (centralized network configuration, CNC) network element, a TSN terminal (including a transmit end talker and a receive end listener), and a TSN bridge (TSN bridge). The TSN bridge may also be referred to as a TSN switching node or a TSN node.

The CUC network element is configured to manage the TSN terminal (including Talker and Listener) and a service, and is responsible for discovering and managing the TSN terminal, obtaining a capability of the TSN terminal and a user requirement, sending a requirement of a TSN flow to the CNC, and configuring the TSN terminal based on an indication of the CNC. The CNC network element is responsible for managing a topology (including the TSN terminal and each TSN switching node) of a user plane of a TSN system and capability information of each TSN switching node, generating an end-to-end forwarding path of the TSN flow based on the requirement of the TSN flow, and delivering a scheduling parameter to each TSN switching node. Each TSN switching node reports the capability information of the switching node and topology information to the CNC, and forwards a data flow based on the scheduling parameter delivered by the CNC.

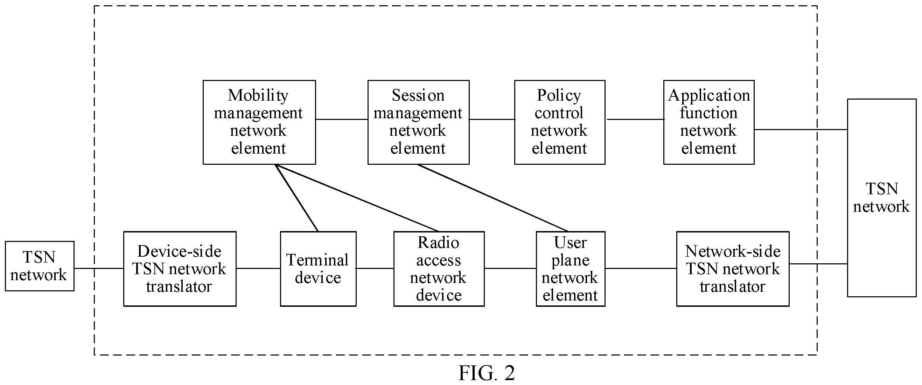

FIG. 2 shows an architecture of a system for interworking between a 3GPP network and a TSN network. The 3GPP network includes a device-side TSN network translator (device-side TSN translator, DS-TT), a terminal device, a radio access device, a user plane network element, a network-side TSN network translator (network-side TSN translator, NW-TT), a mobility management network element, a session management network element, a policy control network element, and an application function network element. Network elements in the dashed box as a whole can be used as a logical TSN bridge. For example, the network elements in the dashed box may be network elements in a 5G system (5G system, 5GS). To be specific, when the 5G network interworks with the TSN network, the 5GS may be used as a TSN bridge, which may be referred to as a 5GS bridge (5GS bridge), or may be referred to as a 5GS node.

In addition, the NW-TT and the user plane network element may be co-deployed (which is not shown in the figure), or may be disposed separately. The DS-TT and the terminal device may be co-deployed (which is not shown in the figure), or may be disposed separately.

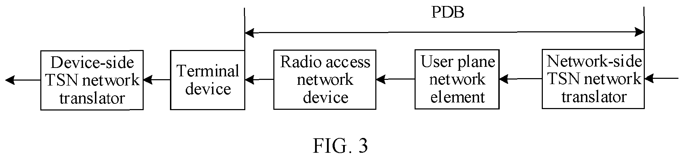

For example, in a downlink, as shown in FIG. 3, after being transmitted from the TSN network to the NW-TT, a packet is sent to the DS-TT through the user plane network element, the radio access network device, and the terminal device. The DS-TT sends the packet based on a sending time window (that is, a gate scheduling parameter) configured by the CNC. To ensure that the packet can be sent in time, the packet needs to arrive at the DS-TT before a preset sending time point, and be buffered at the DS-TT to the sending time window. For a packet with a deterministic delay requirement, the 3GPP network needs to determine a corresponding packet delay budget (packet delay budget, PDB) based on the packet requirement, and ensure that transmission time of the packet between UE and a UPF is not greater than the PDB. In other words, the packet arrives at the DS-TT in advance, so that the packet can catch up with the sending time window configured by the CNC.

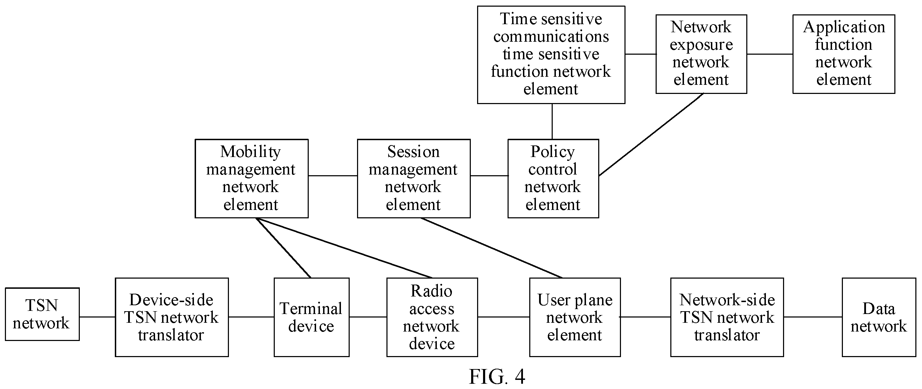

FIG. 4 shows an architecture of a system for interworking between a 3GPP network and a non-TSN network. The system includes a device-side TSN network translator, a terminal device, a radio access device, a user plane network element, a network-side TSN network translator, a mobility management network element, a session management network element, a policy control network element, a time sensitive communications and time sensitive function network element, a network exposure network element, and an application function network element.

The time sensitive communications and time sensitive function network element is a network element newly added in a non-TSN scenario, supports a clock synchronization service, and enables a TSC service in the non-TSN scenario. For example, the network element may be a time sensitive communications and time synchronization function (time sensitive communication and time synchronization function, TSCTSF) network element.

Functions of the TSCTSF network element include:
1: Associate a time synchronization service request from an AF with an AF session (session).
2: Exchange port management information container (port management information container, PMIC) information/bridge management information container (bridge management information container, BMIC) information with a DS-TT and an NW-TT, to manage and control the DS-TT and the NW-TT.
3: Detect availability of 5GS bridge (or referred to as 5GS node) information reported by a PCF.
4: Create a time sensitive communications assistance container (time sensitive communication assistance container, TSCAC) based on a service type parameter provided by the AF/a NEF, and provide the time sensitive communications assistance container to the PCF.
5: Determine a 5GS bridge delay (5GS bridge delay) based on UE-DS-TT residence time, and provide the UE-DS-TT residence time to the PCF.

In addition, in the 3GPP network, to ensure end-to-end service quality, a QoS model based on a quality of service flow (quality of service flow, QoS flow) is proposed. The QoS model supports a guarantee bite rate QoS flow (guarantee bite rate QoS flow, GBR QoS flow) and a non-GBR QoS flow (Non-GBR QoS flow). A same transmission processing manner may be used for data packets controlled by a same QoS flow.

One or more protocol data unit (protocol data unit, PDU) sessions may be established between one UE and the 3GPP network; and one or more QoS flows may be established in each PDU session. Each QoS flow is identified by one QoS flow identifier (QoS flow identifier, QFI). It is generally considered that, in a TSN/TSC scenario, QoS flows are in a one-to-one correspondence with service data flows. To be specific, an SMF binds a service flow corresponding to a PCC rule (policy of charging and control rule) with the TSCAC to an independent QoS flow, and another service flow is not bound to the QoS flow.

Currently, when the 3 GPP network interworks with a time sensitive network (including a TSN network and a non-TSN time sensitive network), a data packet may be buffered/queued for a long time at an access network device or a terminal device.

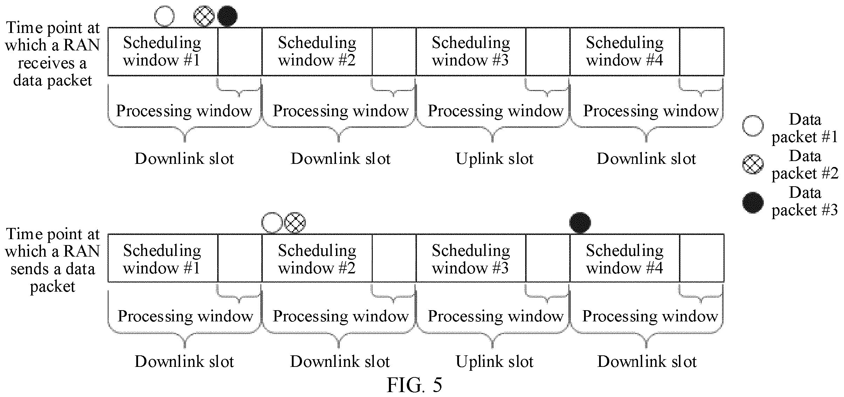

In a downlink scenario, for example, FIG. 5 shows four slots (slots), and each slot includes a scheduling window and a processing window. One scheduling window may be used in an uplink or in a downlink. The processing window is used for processing a service packet, and corresponds to a processing delay, for example, a sending time interval (transmission time interval, TTI) scheduling guard band delay. If a data packet #1 and a data packet #2 arrive at a RAN in a scheduling window #1, fastest time points for sending the data packet #1 and the data packet #2 may be in a scheduling window #2. If a data packet #3 arrives at the RAN in the processing window, a fastest time point for sending the data packet #3 may be in a scheduling window #4. That is, because the data packet #1 to the data packet #3 arrive at the RAN at different time points, queuing delays of the data packet #1 to the data packet #3 in the RAN are also different. A queuing delay of the data packet #1 in the RAN is less than one slot (slot), a queuing delay of the data packet #2 in the RAN is one processing window, and a queuing delay of the data packet #3 in the RAN is greater than two slots. Typical duration of one slot in the RAN is 125 µs. For some services with high requirements on a delay, an excessively long queuing delay needs to be avoided.

In an uplink scenario, a data packet may also be buffered or queued at the UE for a long time.

To resolve the problem, a scheduling coordinator (for example, an SMF) may obtain air interface scheduling information from the RAN, and obtain a delay requirement of a service from an AF. Further, the scheduling coordinator adjusts a sending time point of a service packet based on the air interface scheduling information and the delay requirement of the service, so that the sending time point of the service packet can be in a nearest slot as much as possible, and long-time waiting can be avoided.

To optimize the foregoing solution, this application proposes a communications method, to further reduce a queuing delay of a data packet at an access network device or a terminal device.

For example, in a TSN scenario, the following describes the technical solutions in embodiments of this application with reference to the accompanying drawings. It should be understood that, in a non-TSN scenario, the AF in embodiments of this application may be replaced with a TSCTSF network element.

FIG. 6 shows a method according to this application, where the method includes the following steps.

S601: An AF determines information about a plurality of arrival time points of a first data packet of a service #1.

In this application, the first data packet of the service #1 may be a 1^{st} data packet of the service #1, and a first data packet of a service #2 may be a 1^{st} data packet of the service #2. Details are not described below.

Information about an arrival time point of a data packet may be burst arrival time (burst arrival time, BAT) of the data packet. In other words, the AF may determine a plurality of BATs for the first data packet of the service #1.

The plurality of arrival time points meet a preset requirement of the service #1. In other words, the AF may determine the information about the plurality of arrival time points of the first data packet of the service #1 based on the preset requirement of the service #1. The preset requirement of the service #1 includes but is not limited to one or more of the following:
a requirement on an arrival time interval of a data packet of the service #1, a requirement on a sending sequence of the service #1, and a requirement on an adjustment granularity of an arrival time point of the data packet of the service #1.

In a manner, the preset requirement of the service #1 may be preconfigured in the AF. For example, a controller (for example, a CNC network element) in a TSN network may configure the preset requirement of the service #1 for the AF.

In another manner, the AF may alternatively determine the preset requirement of the service #1. For example, if the AF determines that the service #1 is a response service of the service #2, the AF determines that the sending sequence of the service #1 is after a sending sequence of the service #2.

For example, in an uplink direction, the requirement on the arrival time interval of the data packet of the service #1 is a requirement on a time interval for the data packet to arrive at a DS-TT; and in a downlink direction, the requirement on the arrival time interval of the data packet of the service #1 is a requirement on a time interval for the data packet to arrive at an NW-TT.

For example, the sending sequence of the service #1 may be an absolute sending sequence. For example, a parameter A may be used for representing the absolute sequence of the service #1. For example, there are two services (denoted as a service #1 and a service #2), a parameter A of the service #1 is 1, and a parameter A of the service #2 is 2. Therefore, the sending sequence of the service #1 is before the sending sequence of the service #2. The sending sequence of the service #1 may alternatively be a relative sending sequence. For example, the service #1 is sent before the service #2.

For example, the adjustment granularity of the arrival time point of the data packet of the service #1 may be at a microsecond level or at a millisecond level.

The preset requirement of the service #1 is not described in detail below.

In addition, in the downlink direction, the plurality of arrival time points of the first data packet of the service #1 are a plurality of time points of arriving at the NW-TT; and in the uplink direction, the plurality of arrival time points of the first data packet of the service #1 are a plurality of time points of arriving at the DS-TT.

The following uses several examples to describe a manner in which the AF determines the information about the plurality of arrival time points of the first data packet of the service #1.

### Example 1:

The arrival time interval of the data packet of the service #1 is [A, B]. For example, the CNC network element may configure the arrival time interval for the AF.

In a manner, the AF determines the plurality of arrival time points of the first data packet of the service #1 based on the arrival time interval, that is, the arrival time interval of [A, B] includes the plurality of arrival time points.

In another manner, the AF determines that the information about the plurality of arrival time points of the first data packet of the service #1 is an arrival time interval of [a, b], where the arrival time interval of [a, b] is a subset of the arrival time interval of [A, B].

In another manner, the AF determines that the information about the plurality of arrival time points of the first data packet of the service #1 is a plurality of arrival time intervals (for example, [a1, b1], [a2, b2], and [a3, b3]), and the arrival time intervals of [a1, b1], [a2, b2], and [a3, b3] are all subsets of the arrival time interval of [A, B]. Optionally, the plurality of arrival time intervals may have a priority sequence.

### Example 2:

The sending sequence of the service #1 is before the sending sequence of the service #2.

In a manner, if a plurality of arrival time points of the first data packet of the service #2 are 4s, 5s, and 6s, to meet the requirement on the sending sequence of the service #1, the plurality of arrival time points of the first data packet of the service #1 may be 1s, 2s, and 3s.

In another manner, if an arrival time interval of the first data packet of the service #2 is [4s, 6s], to meet the requirement on the sending sequence of the service #1, the arrival time interval of the first data packet of the service #1 may be [1s, 3s].

### Example 3:

If the adjustment granularity of the arrival time point of the data packet of the service #1 is at the microsecond level, a time offset (offset) between the plurality of arrival time points of the first data packet of the service #1 is also at the microsecond level.

If the adjustment granularity of the arrival time point of the data packet of the service #1 is at the millisecond level, the time offset between the plurality of arrival time points of the first data packet of the service #1 is also at the millisecond level.

For example, the plurality of arrival time points may be a group of arrival time points that comply with an arithmetic sequence rule. For example, the plurality of arrival time points are 5 ms, 10 ms, 15 ms, and 20 ms, that is, a time offset between each two adjacent arrival time points is 5 ms.

The foregoing several examples may be combined with each other, that is, the AF may determine the information about the plurality of arrival time points in combination with the foregoing several manners.

For example, the plurality of arrival time points may include a preferential arrival time point and at least one candidate arrival time point, and a priority of the preferential arrival time point is higher than a priority of the at least one candidate arrival time point. For example, the at least one candidate arrival time point has a same priority. For example, the at least one candidate arrival time point may alternatively have a priority sequence.

In a manner, a priority of each arrival time point may be explicitly indicated using a newly added parameter (denoted as a parameter #A). In another manner, a priority of each arrival time point may be implicitly indicated using an arrangement sequence of the plurality of arrival time points. For example, a priority of an arrival time point with a higher arrangement rank is higher than a priority of an arrival time point with a lower arrangement rank.

For example, the plurality of arrival time points may include one arrival time point and a plurality of time offsets relative to the one arrival time point.

For example, the one arrival time point is 1s, and the plurality of time offsets are a backward offset of 2 ms, a backward offset of 4 ms, and a backward offset of 6 ms.

For example, the plurality of arrival time points may be a plurality of time offsets.

For example, the plurality of time offsets are a backward offset of 2 ms, a backward offset of 4 ms, and a backward offset of 6 ms. Subsequently, in the downlink direction, a RAN may select an optimal time offset from a plurality of time offsets based on a time point at which the first data packet arrives at the RAN, and perform feedback. In the uplink direction, the RAN may select an optimal time offset from a plurality of time offsets based on a time point at which the first data packet arrives at UE, and perform feedback.

In conclusion, the information about the plurality of arrival time points of the first data packet of the service #1 may be a plurality of absolute moments, or may be one absolute moment and a plurality of offsets relative to the absolute moment, or may be a plurality of offsets, or may be one or more time intervals that can reflect the plurality of arrival time points.

S602: The AF sends identification information of the service #1 and the information about the plurality of arrival time points of the first data packet of the service #1 to an SMF. Correspondingly, the SMF receives the identification information of the service #1 and the information about the plurality of arrival time points of the first data packet of the service #1.

For example, the AF may send a TSCAC to the SMF, where the TSCAC includes the information about the plurality of arrival time points of the first data packet of the service #1. It should be understood that the information about the plurality of arrival time points of the first data packet of the service #1 may be carried in one or more TSCACs. This is not limited.

For example, the identification information of the service #1 may be a service identifier (service ID), or may be quintuple information, or may be an application identifier (App ID).

For example, the AF may directly send information to the SMF; or the AF may send information to a PCF, and the PCF sends the information to the SMF. This is not limited.

S603: The SMF determines a plurality of arrival time points of a first data packet in a QoS flow #1 based on the information about the plurality of arrival time points of the first data packet of the service #1.

For example, the first data packet in the QoS flow #1 may be a 1^{st} data packet in the QoS flow #1, and a first data packet in a QoS flow #2 may be a 1^{st} data packet in the QoS flow #2. Details are not described below. It should be understood that the service #1 corresponds to the QoS flow #1.

For example, the 1^{st} data packet in the QoS flow #1 may be understood as a 1^{st} data packet related to the service #1 on the QoS flow #1.

For example, both the first data packet of the service #1 and the first data packet in the QoS flow #1 are burst first data packets.

In addition, if a plurality of services have a same arrival time point, the plurality of services may also be bound to a same QoS flow. For example, if the plurality of arrival time points of the first data packet of the service #1 are a time point #1, a time point #2, and a time point #3, and the plurality of arrival time points of the first data packet of the service #2 are also the time point #1, the time point #2, and the time point #3, both the service #1 and the service #2 may be bound to the QoS flow #1.

If a plurality of services have different arrival time points, for example, the plurality of arrival time points of the first data packet of the service #1 are a time point #1, a time point #2, and a time point #3, and the plurality of arrival time points of the first data packet of the service #2 are a time point #4, a time point #5, and a time point #6, different service flows are bound to different QoS flows.

In the uplink direction, the plurality of arrival time points of the first data packet in the QoS flow #1 are a plurality of time points at which the first data packet arrives at an egress of the UE. In the downlink direction, the plurality of arrival time points of the first data packet in the QoS flow #1 are a plurality of time points at which the first data packet arrives at an ingress of the RAN.

For ease of description, the plurality of arrival time points of the first data packet of the service #1 are denoted as a plurality of arrival time points #A, and the plurality of arrival time points of the first data packet in the QoS flow #1 are denoted as a plurality of arrival time points #a. It should be understood that the plurality of arrival time points #A are in a one-to-one correspondence with the plurality of arrival time points #a. For example, an arrival time point #A1 corresponds to an arrival time point #a1.

For example, in a downlink, the SMF may obtain a latest time offset measurement value and a latest cumulative rate ratio (cumulative rate ratio) that are from a UPF, and correct the plurality of arrival time points #A in the TSCAC based on the latest time offset measurement value and the latest cumulative rate ratio (where the correction process is an optional step). The arrival time point #A1 in the plurality of arrival time points #A is used as an example, and a corrected arrival time point #A1 may be denoted as an arrival time point #A1*. The arrival time point #a1 may be set to a sum of the arrival time point #A1* and a core network packet delay budget (core network packet delay budget, CN PDB), to represent a time point (which may be an accurate time point or a latest possible time point) at which a first data packet of data burst arrives at an AN. It should be understood that, if the foregoing correction is not performed, the arrival time point #a1 may be set to a sum of the arrival time point #A1 and the CN PDB.

The time offset measurement value is a time offset between a 3GPP network time point (for example, a 5GS time point) and an external time point (for example, a TSN network time point). The cumulative rate ratio is a cumulative rate ratio between the 3GPP network time point (for example, the 5GS time point) and the external time point (for example, the TSN network time point). The time offset measurement value and the cumulative rate ratio are not described in detail below.

For example, in an uplink, the SMF may obtain a latest time offset measurement value and a latest cumulative rate ratio that are from the UPF, and correct the plurality of arrival time points #A in the TSCAC based on the latest time offset measurement value and the latest cumulative rate ratio (where the correction process is an optional step). The arrival time point #A1 in the plurality of arrival time points #A is used as an example, and a corrected arrival time point #A1 may be denoted as an arrival time point #A1*. The arrival time point #a1 may be set to a sum of the arrival time point #A1 * and UE-DS-TT residence time, to represent a time point (which may be an accurate time point or a latest possible time point) at which a first data packet of data burst arrives at the egress of the UE. It should be understood that, if the foregoing correction is not performed, the arrival time point #a1 may be set to a sum of the arrival time point #A1 and the UE-DS-TT residence time.

The UE-DS-TT residence time is time needed for transmitting a data packet between the UE and the DS-TT. The UE-DS-TT residence time may be provided by the UE to a network device in a PDU session establishment process. For example, the UE-DS-TT residence time may be the same in the uplink and the downlink, and is applicable to all QoS flows.

In addition, in another possible implementation, the SMF may alternatively determine the plurality of arrival time points of the first data packet in the QoS flow #1 based on local configuration information. For example, if the UE does not provide the UE-DS-TT residence time, the SMF may determine the plurality of arrival time points of the first data packet in the QoS flow #1 based on the local configuration information. The local configuration information includes the configured UE-DS-TT residence time.

In the foregoing correction process, the cumulative rate ratio is an optional parameter.

In addition, if the plurality of arrival time points of the first data packet of the service #1 are a plurality of offsets, the SMF may correct the plurality of offsets based on the latest time offset measurement value and/or the latest cumulative rate ratio that are/is obtained from the UPF (where the correction process is an optional step).

For example, if the information about the plurality of arrival time points of the first data packet of the service #1 is a BAT 1, a BAT 2, and a BAT 3, the plurality of arrival time points of the first data packet in the QoS flow #1 are a BAT 1*, a BAT 2*, and a BAT 3*. The BAT 1 to the BAT 3 correspond to the BAT 1* to the BAT 3* respectively, and details are not described below.

For another example, if the information about the plurality of arrival time points of the first data packet of the service #1 is the BAT 1 and a plurality of offsets (for example, an offset 1, an offset 2, and an offset 3) relative to the BAT 1, the plurality of arrival time points of the first data packet in the QoS flow #1 are the BAT 1* and a plurality of offsets (for example, an offset 1, an offset 2, and an offset 3) relative to the BAT 1*.

For another example, if the information about the plurality of arrival time points of the first data packet of the service #1 is an arrival time interval of [a, b], information about the plurality of arrival time points of the first data packet in the QoS flow #1 is an arrival time interval of [a*, b*]. a corresponds to a*, and b corresponds to b*.

For another example, if the information about the plurality of arrival time points of the first data packet of the service #1 is a plurality of offsets (for example, an offset 1, an offset 2, and an offset 3), the information about the plurality of arrival time points of the first data packet in the QoS flow #1 is also a plurality of offsets (for example, an offset 1, an offset 2, and an offset 3).

For example, if the plurality of arrival time points of the first data packet of the service #1 are a plurality of absolute moments, the corresponding plurality of arrival time points of the first data packet in the QoS flow #1 may also be one absolute moment and a plurality of offsets relative to the one absolute moment. On the contrary, if the plurality of arrival time points of the first data packet of the service #1 are one absolute moment and a plurality of offsets relative to the one absolute moment, the corresponding plurality of arrival time points of the first data packet of the QoS flow #1 may also be a plurality of absolute moments.

In conclusion, the information about the plurality of arrival time points of the first data packet in the QoS flow #1 may be a plurality of absolute moments, or may be one absolute moment and a plurality of offsets relative to the absolute moment, or may be information about one or more arrival time intervals, or may be a plurality of offsets.

It should be understood that, if the plurality of arrival time points of the first data packet of the service #1 have a priority sequence, the plurality of arrival time points of the first data packet in the QoS flow #1 have a same priority sequence.

S604: The SMF sends an identifier of the QoS flow #1 and the information about the plurality of arrival time points of the first data packet in the QoS flow #1 to the RAN. Correspondingly, the RAN receives the identifier of the QoS flow #1 and the information about the plurality of arrival time points of the first data packet in the QoS flow #1.

Because the plurality of arrival time points of the first data packet of the service #1 meet the preset requirement of the service #1, the plurality of arrival time points of the first data packet in the QoS flow #1 also meet the preset requirement of the service #1.

For example, the SMF may send time sensitive communications assistance information (time sensitive communication assistance information, TSCAI) to the RAN, and the TSCAI includes the information about the plurality of arrival time points of the first data packet in the QoS flow #1. It should be understood that, the information about the plurality of arrival time points of the first data packet in the QoS flow #1 may be carried in one or more TSCAI. This is not limited.

For example, the TSCAI may further include periodicity information (which is an interval between two adjacent burst start time points) and direction information (including the uplink direction or the downlink direction) of the QoS flow #1.

S605: The RAN determines a target arrival time point of the first data packet in the QoS flow #1 based on the information about the plurality of arrival time points of the first data packet in the QoS flow #1.

For example, a waiting delay corresponding to the target arrival time point of the first data packet in the QoS flow #1 is less than or equal to a preset threshold.

For example, the preset threshold may be n slots, where n is a positive integer. A value of n may be determined based on an uplink-downlink slot configuration. For example, if the uplink-downlink slot configuration is 1:2, n may be set to 1.

For another example, the preset threshold may be a processing delay of the RAN. It should be understood that the processing delay may be specific to the downlink direction, or may be specific to the uplink direction. As shown in FIG. 1E, the processing delay may be duration of one processing window.

The preset threshold is not described in detail below.

In the uplink direction, the waiting delay corresponding to the target arrival time point of the first data packet in the QoS flow #1 is a waiting delay at the UE. In the downlink direction, the waiting delay corresponding to the target arrival time point of the first data packet in the QoS flow #1 is a waiting delay at the RAN.

In a manner, the RAN may determine an available slot (slot) based on an air interface status (or referred to as radio scheduling information). Further, the RAN determines the target arrival time point of the first data packet in the QoS flow #1 based on the available slot.

The air interface status includes one or more of the following:
a start time point of a TTI, slot duration, an uplink-downlink slot configuration, and protection duration of the TTI of the RAN node. The air interface status is not described in detail below.

For example, in the downlink, it is assumed that downlink scheduling windows of the RAN may be represented using (T1₀, T2₀), (T1₁, T2₁), ..., (T1ₙ₋₁, T2ₙ₋₁), (T1ₙ, T2ₙ), (T1ₙ₊₁, T2ₙ₊₁), and so on, and the RAN determines, based on the air interface status, that the downlink scheduling windows (T1ₙ₋₁, T2ₙ₋₁), (T1ₙ, T2ₙ), and (T1ₙ₊₁, T2ₙ₊₁) that are of the RAN are available. Further, if a time point #A in the plurality of arrival time points is located in an available downlink scheduling window, the time point #A may be the target arrival time point; and if a time point #B in the plurality of arrival time points is not located in the available downlink scheduling window, the time point #B is not the target arrival time point.

For example, when the information about the plurality of arrival time points is the arrival time interval of [a, b], the RAN may determine the target arrival time point based on an available downlink scheduling window in the interval of [a, b]. For example, if the downlink scheduling window of (T1ₙ₋₁, T2ₙ₋₁) is available and is located in the time interval of [a, b], the target arrival time point may be determined in (T1ₙ₋₁, T2ₙ₋₁); or if the downlink scheduling window of (T1ₙ₋₁, T2ₙ₋₁) is unavailable, the target arrival time point is not determined in (T1ₙ₋₁, T2ₙ₋₁) even if the downlink scheduling window is located in the time interval of [a, b].

In addition, a plurality of QoS flows may simultaneously arrive at the RAN with collision (or referred to as conflict). If a plurality of data packets need to be scheduled in one slot but resources of the RAN are limited and the limited resources may not be sufficient for scheduling all the data packets, some data packets may be adjusted to another slot for scheduling.

For example, the plurality of arrival time points of the first data packet in the QoS flow #1 are a time point #1, a time point #2, and a time point #3, and available downlink scheduling windows are a window #1, a window #2, and a window #3. The time point #1 is located in the window #1, the time point #2 is located in the window #2, and the time point #3 is located in the window #3. Because the RAN needs to schedule a plurality of other data packets in the window #1, and there is no resource used for scheduling the first data packet, the time point #1 is not the target arrival time point, and the target arrival time point may be further determined in the time point #2 or the time point #3.

The following uses several examples to describe a manner in which the RAN determines the target arrival time point of the first data packet in the QoS flow #1.

### Example 1:

The RAN determines one or more arrival time points that are of the plurality of arrival time points of the first data packet in the QoS flow #1 and that are located in an available slot. The RAN may select one (that is, the target arrival time point) of the time points to perform feedback. Specifically, the RAN determines a waiting delay corresponding to each arrival time point that is of the plurality of arrival time points and that is located in the available slot, and determines that the target arrival time point of the first data packet in the QoS flow #1 is an arrival time point with a smallest waiting delay. During implementation, a determining condition may be that the waiting delay corresponding to the target arrival time point is less than or equal to the preset threshold.

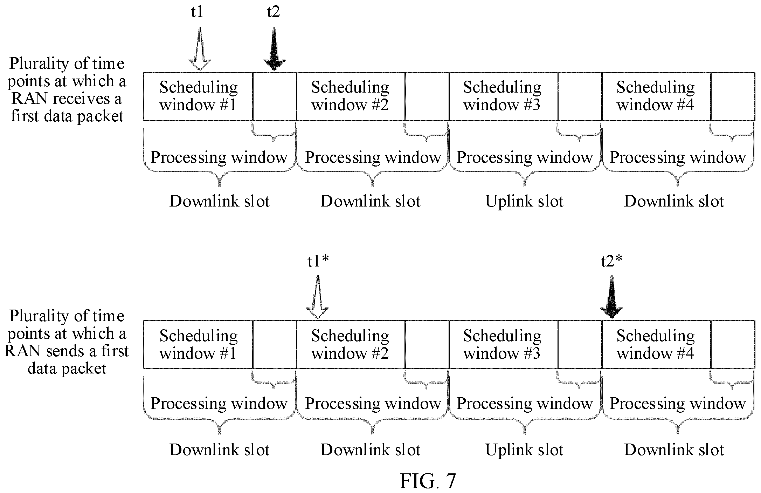

For example, in the downlink, it is assumed that the preset threshold is one slot. As shown in FIG. 7, a plurality of arrival time points located in an available slot are t1 and t2, where t1 is located in a scheduling window #1, and t2 is located in a processing window. If the first data packet arrives at the RAN at t1, an earliest time point at which the RAN sends the first data packet may be in a scheduling window #2 (for example, t1* in the scheduling window #2), and a waiting delay corresponding to t1 is less than one slot. Alternatively, if the first data packet arrives at the RAN at t2, because a scheduling window #3 belongs to an uplink slot, an earliest time point at which the first data packet sends the first data packet is in a scheduling window #4 (for example, t2* in the scheduling window #4), and a waiting delay corresponding to t2 is greater than one slot. That is, the waiting delay corresponding to t2 is greater than the waiting delay corresponding to t1. Therefore, the target arrival time point of the first data packet is t1.

### Example 2:

The plurality of arrival time points of the first data packet in the QoS flow #1 include a preferential arrival time point and at least one candidate arrival time point, and a priority of the preferential arrival time point is higher than a priority of the at least one candidate arrival time point.

When a waiting delay corresponding to the preferential arrival time point is less than or equal to the preset threshold, an access network device determines the preferential arrival time point as the target arrival time point; or when a waiting delay corresponding to the preferential arrival time point is greater than the preset threshold, an access network device determines the target arrival time point based on the at least one candidate arrival time point.

In a manner, if the at least one candidate arrival time point has a priority sequence, the access network device determines the target arrival time point based on the priority sequence.

In another manner, if the at least one candidate arrival time point does not have a priority sequence, the RAN determines a waiting delay corresponding to each of the at least one candidate arrival time point, and determines that the target arrival time point is a candidate arrival time point with a smallest waiting delay in the at least one candidate arrival time point.

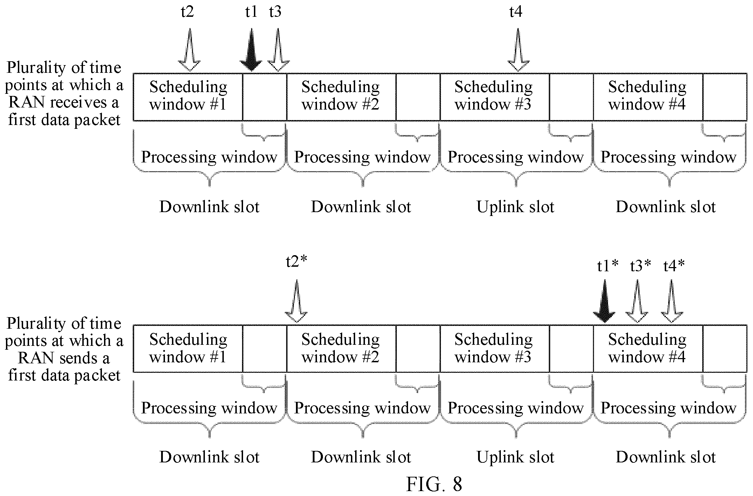

For example, in the downlink, it is assumed that the preset threshold is one slot. As shown in FIG. 8, a preferential arrival time point is 11, and candidate arrival time points are t2, t3, and t4. As analyzed in the example 1, the waiting delay corresponding to t1 is greater than one slot, that is, the preferential arrival time point does not meet a requirement. Therefore, the target arrival time point may be determined from the candidate arrival time points. It should be understood that, t1 to t4 in FIG. 8 respectively correspond to t1* to t4*. In the candidate arrival time points, if a waiting delay corresponding to t2 is less than one slot, a waiting delay corresponding to t3 is greater than one slot, and a waiting delay corresponding to t4 is less than one slot, the target arrival time point may be determined as t2 or t4. In a manner, if a priority of t2 is higher than a priority of t4, the target arrival time point is t2. In another manner, if the waiting delay corresponding to t2 is less than the waiting delay corresponding to t4, the target arrival time point is t2.

### Example 3:

If the information about the plurality of arrival time points of the first data packet in the QoS flow #1 is information about an arrival time interval, the RAN determines the target arrival time point based on the arrival time interval.

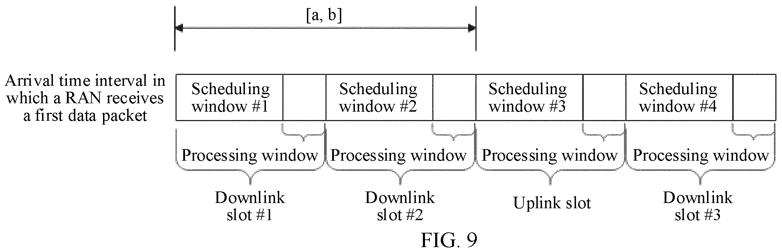

For example, in the downlink, as shown in FIG. 9, the arrival time interval is an interval of [a, b]. Because a downlink slot #1 and a downlink slot #2 are located in the interval of [a, b], the target arrival time point may be determined in the downlink slot #1 and the downlink slot #2. Further, if the downlink slot #1 is an available slot, the target arrival time point may be determined in the downlink slot #1 (for example, a scheduling window #1 of the downlink slot #1); and if the downlink slot #2 is not an available slot, the target arrival time point is not determined in the downlink slot #2.

S606: The RAN sends the identifier of the QoS flow #1 and the target arrival time point of the first data packet in the QoS flow #1 to the SMF. Correspondingly, the SMF receives the identifier of the QoS flow #1 and the target arrival time point of the first data packet in the QoS flow #1.

For example, the RAN may send a TSCAI to the SMF, where the TSCAI includes the target arrival time point of the first data packet in the QoS flow #1.

S607: The SMF determines a target arrival time point of the first data packet of the service #1 based on the target arrival time point of the first data packet in the QoS flow #1.

It should be understood that, the information that is about the plurality of arrival time points of the first data packet of the service #1 and that is received by the SMF in S602 includes the target arrival time point of the first data packet of the service #1.

In the uplink direction, the target arrival time point of the first data packet in the QoS flow #1 is a time point that is determined by the RAN and that is of arriving at the egress of the UE. In the downlink direction, the target arrival time point of the first data packet in the QoS flow #1 is a time point that is determined by the RAN and that is of arriving at the ingress of the RAN.

For ease of description, the target arrival time point of the first data packet in the QoS flow #1 is denoted as a target arrival time point #m, and the target arrival time point of the first data packet of the service #1 is denoted as a target arrival time point #M.

For example, in the downlink, the SMF may obtain a latest time offset measurement value and a latest cumulative rate ratio that are from the UPF, and correct the target arrival time point #m based on the latest time offset measurement value and the latest cumulative rate ratio (where the correction process is an optional step). A corrected target arrival time point #m may be denoted as a target arrival time point #m*. The target arrival time point #M may be set to a value obtained by subtracting the CN PDB from the target arrival time point #m*, to represent a time point (which may be an accurate time point or a latest possible time point) at which a first data packet of data burst arrives at (an ingress port of) the UPF (NW-TT). It should be understood that, if the foregoing correction is not performed, the target arrival time point #M may be set to a value obtained by subtracting the CN PDB from the target arrival time point #m.

For example, in the uplink, the SMF may obtain a latest time offset measurement value and a latest cumulative rate ratio that are from the UPF, and correct the target arrival time point #m based on the latest time offset measurement value and the latest cumulative rate ratio (where the correction process is an optional step). A corrected target arrival time point #m may be denoted as the target arrival time point #m*. The target arrival time point #M may be set to a value obtained by subtracting the UE-DS-TT residence time from the target arrival time point #m*, to represent a time point (which may be an accurate time point or may be a latest possible time point) at which a first data packet of data burst arrives at (an ingress port of) the DS-TT. It should be understood that, if the foregoing correction is not performed, the target arrival time point #M may be set to a value obtained by subtracting the UE-DS-TT residence time from the target arrival time point #m.

In addition, in another possible implementation, the SMF may alternatively determine the target arrival time point of the first data packet of the service #1 based on local configuration information. For example, if the UE does not provide the UE-DS-TT residence time, the SMF may determine the target arrival time point of the first data packet of the service #1 based on the local configuration information. The local configuration information includes the configured UE-DS-TT residence time.

In the foregoing correction process, the cumulative rate ratio is an optional parameter.

In addition, if the target arrival time point of the first data packet in the QoS flow #1 is one offset, the SMF may correct the offset based on the latest time offset measurement value and/or the latest cumulative rate ratio that are/is obtained from the UPF (where the correction process is an optional step).

S608: The SMF sends the identification information of the service #1 and the target arrival time point of the first data packet of the service #1 to the AF. Correspondingly, the AF receives the identification information of the service #1 and the target arrival time point of the first data packet of the service #1.

For example, the SMF may perform sending to the AF through the PCF.

For example, the SMF may send a TSCAC to the AF, where the TSCAC includes the target arrival time point of the first data packet of the service #1.

S609: The AF adjusts a sending time point of the first data packet of the service #1 based on the target arrival time point of the first data packet of the service #1.

For example, a sending time point of another data packet of the service #1 may be determined based on the sending time point of the first data packet of the service #1.

According to the method in this application, the information that is about the plurality of arrival time points of the first data packet of the service and that is determined by the AF meets the preset requirement of the service. Further, the RAN determines the target arrival time point based on the information about the plurality of arrival time points. The waiting delay corresponding to the target arrival time point is less than or equal to the preset threshold. Further, the AF adjusts the sending time point of the first data packet based on the target arrival time point. Therefore, according to the method in this application, a queuing delay of the first data packet at the RAN or in the UE can be reduced.

According to another aspect, if the AF provides only one arrival time point each time, a plurality of times of negotiation may need to be performed between the AF, the UPF, the RAN, and a scheduling coordinator (for example, the SMF), to determine a proper target arrival time point. In comparison, in this application, because the AF provides the plurality of arrival time points, the plurality of times of negotiation between the AF, the RAN, and the scheduling coordinator can be avoided. This reduces signaling overheads, reduces time consumed for determining the target arrival time point, and improves communications efficiency.

In addition, optionally, the RAN may also report capability information of the RAN to the SMF. Further, the SMF reports the capability information of the RAN to the PCF. The capability information of the RAN includes one or more of the following:
information about whether the RAN has a capability of cross-layer scheduling optimization, information about whether the RAN has a capability of multi-level adjustment, and information about a duplex mode (for example, time division duplex and frequency division duplex) used by the RAN.

For example, in S602, the AF sends the TSCAC through the PCF. If the PCF determines that the RAN uses the time division duplex, the PCF further sends the TSCAC to the SMF. Alternatively, if the PCF determines that the RAN does not use the time division duplex, the PCF does not send the TSCAC to the SMF.

For example, in S604, if the SMF determines that the RAN uses the time division duplex, the SMF further sends the TSCAI to the RAN. Alternatively, if the SMF determines that the RAN does not use the time division duplex, the SMF does not send the TSCAI to the RAN.

FIG. 10 is a method according to this application, where the method includes the following steps.

S1001: An AF sends an identifier of a service #1 and a preset requirement of the service #1 to an SMF. Correspondingly, the SMF receives the identifier of the service #1 and the preset requirement of the service #1.

For example, the AF further sends a preferential arrival time point of a first data packet of the service #1 to the SMF.

It should be understood that, in a downlink direction, the preferential arrival time point of the first data packet of the service #1 is a preferential time point of arriving at an NW-TT; and in an uplink direction, the preferential arrival time point of the first data packet of the service #1 is a preferential time point of arriving at a DS-TT.

For the preset requirement of the service #1, refer to the description in S601.

For example, the AF may directly send information to the SMF; or the AF may send information to a PCF, and the PCF send the information to the SMF. This is not limited.

For example, the AF may send a TSCAC to the SMF, where the TSCSAC includes the preset requirement of the service #1. For example, the TSCSAC further includes the preferential arrival time point of the first data packet of the service #1.

S1002: The SMF determines a preferential arrival time point of a first data packet in a QoS flow #1 based on the preferential arrival time point of the first data packet of the service #1.

This step is an optional step.

It should be understood that, in the downlink direction, the preferential arrival time point of the first data packet in the QoS flow #1 is a preferential time point of arriving at an ingress of a RAN; and in the uplink direction, the preferential arrival time point of the first data packet in the QoS flow #1 is a preferential time point at which the first data packet arrives at an egress of UE.

For ease of description, the preferential arrival time point of the first data packet of the service #1 is denoted as a preferential arrival time point #N, and the preferential arrival time point of the first data packet in the QoS flow #1 is denoted as a preferential arrival time point #n.

For example, in a downlink, the SMF may obtain a latest time offset measurement value and a latest cumulative rate ratio that are from a UPF, and correct the preferential arrival time point #N based on the latest time offset measurement value and the latest cumulative rate ratio (where the correction process is an optional step). A corrected preferential arrival time point #N may be denoted as a preferential arrival time point #N*. The preferential arrival time point #n may be set to a sum of the preferential arrival time point #N* and a CN PDB. It should be understood that, if the foregoing correction process is not performed, the preferential arrival time point #n may be set to a sum of the preferential arrival time point #N and the CN PDB.

For example, in an uplink, the SMF may obtain a latest time offset measurement value and a latest cumulative rate ratio that are from a UPF, and correct the preferential arrival time point #N based on the latest time offset measurement value and the latest cumulative rate ratio (where the correction process is an optional step). A corrected preferential arrival time point #N may be denoted as a preferential arrival time point #N*. The preferential arrival time point #n may be set to a sum of the preferential arrival time point #N* and UE-DS-TT residence time. It should be understood that, if the foregoing correction process is not performed, the preferential arrival time point #n may be set to a sum of the preferential arrival time point #N and the UE-DS-TT residence time.

In addition, in the foregoing correction process, the cumulative rate ratio is an optional parameter.

S1003: The SMF sends an identifier of a QoS flow #1 and a preferential arrival time point of a first data packet in the QoS flow #1 to the RAN. Correspondingly, the RAN receives the identifier of the QoS flow #1 and the preferential arrival time point of the first data packet in the QoS flow #1.

The preferential arrival time point of the first data packet in the QoS flow #1 is optional.

For example, the SMF may send a TSCAI to the RAN, where the TSCAI includes the preferential arrival time point of the first data packet in the QoS flow #1.

S1004: The RAN determines a plurality of arrival time points of the first data packet in the QoS flow #1.

In other words, in a manner, the SMF first determines one preferential arrival time point according to S1002, and notifies the RAN according to S1003. When a waiting delay corresponding to the preferential arrival time point of the first data packet in the QoS flow #1 is greater than a preset threshold, the RAN determines the plurality of arrival time points of the first data packet in the QoS flow #1.

In another possible implementation, the SMF may not perform the foregoing S1002. Correspondingly, information sent according to S1003 does not include the preferential arrival time point of the first data packet in the QoS flow #1, and the RAN may determine the plurality of arrival time points of the first data packet in the QoS flow #1. For example, in S1003, the SMF may send indication information #A to the RAN, where the indication information #A indicates the RAN to perform an action in S1004. For example, the RAN may alternatively determine, based on the identifier of the QoS flow #1, a network slice corresponding to the QoS flow #1; and if a plurality of arrival time points of a first data packet of a service in the network slice that needs to be determined are preconfigured in the RAN, the SMF performs the action in S1004.

For example, waiting delays respectively corresponding to the plurality of arrival time points of the first data packet in the QoS flow #1 each are less than or equal to the preset threshold.

In a manner, the RAN may determine an available slot based on an air interface status. Further, the RAN determines the plurality of arrival time points of the first data packet in the QoS flow #1 based on the available slot.

For description in which the RAN determines the available slot based on the air interface status, refer to the description in S605.

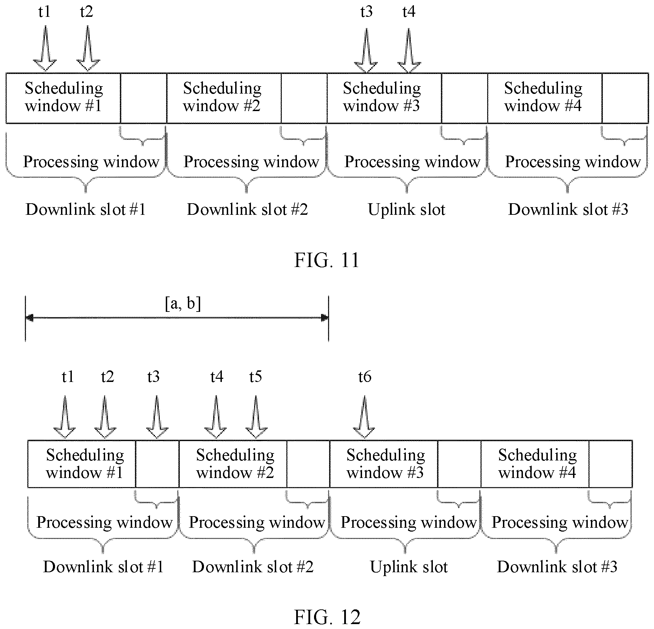

For example, as shown in FIG. 11, the RAN determines that available slots are a downlink slot #1, a downlink slot #2, and an uplink slot. If the preset threshold is preconfigured in the RAN as one slot, the RAN determines t1 and t2 in a scheduling window #1 of the downlink slot #1, and determines t3 and t4 in a scheduling window #3 of the uplink slot. Waiting delays respectively corresponding to t1 to t4 each are less than one slot.

S1005: The RAN sends the identifier of the QoS flow #1 and a plurality of arrival time points of a first data packet in the QoS flow #1 to the SMF. Correspondingly, the SMF receives the identifier of the QoS flow #1 and the plurality of arrival time points of the first data packet in the QoS flow #1.

For example, the plurality of arrival time points of the first data packet in the QoS flow #1 have a priority sequence.

In a manner, a priority of each of the plurality of arrival time points of the first data packet in the QoS flow #1 may be explicitly indicated using a newly added parameter (denoted as a parameter #B). That is, the RAN may further send the parameter #B to the SMF.

In another manner, a priority of each arrival time point may be implicitly indicated using an arrangement sequence of the plurality of arrival time points of the first data packet in the QoS flow #1.

For example, the RAN may send a TSCAI to the SMF, where the TSCAI includes the plurality of arrival time points of the first data packet in the QoS flow #1.

S1006: The SMF determines a target arrival time point of the first data packet in the QoS flow #1 based on the plurality of arrival time points of the first data packet in the QoS flow #1.

In a manner, the SMF may determine a preset requirement of the QoS flow #1 based on the preset requirement of the service #1.

For example, if a requirement on an arrival time interval of a data packet of the service #1 is an interval of [A, B], the SMF determines that a requirement on an arrival time interval of a data packet in the QoS flow #1 is an interval of [C, D].

For example, in the downlink, the SMF may obtain the latest time offset measurement value and the latest cumulative rate ratio that are from the UPF, and correct a value of Abased on the latest time offset measurement value and the latest cumulative rate ratio (where the correction process is an optional step). A corrected value of A may be denoted as a value of A*. A value of C may be set to a sum of the value of A* and the CN PDB. It should be understood that, if the foregoing correction is not performed, the value of C may be set to a sum of the value of A and the CN PDB.

For example, in the uplink, the SMF may obtain the latest time offset measurement value and the latest cumulative rate ratio that are from the UPF, and correct a value of A based on the latest time offset measurement value and the latest cumulative rate ratio (where the correction process is an optional step). A corrected value of A may be denoted as a value of A*. A value of C may be set to a sum of the value of A* and the UE-DS-TT residence time. It should be understood that, if the foregoing correction is not performed, the value C may be set to a sum of the value A and the UE-DS-TT residence time.

In addition, in the foregoing correction process, the cumulative rate ratio is an optional parameter.

A relationship between a value of B and a value of D is similar to a relationship between the value of A and the value of C. Details are not described.

It should be understood that, in the uplink direction, the interval of [A, B] is an interval of arriving at the DS-TT, and the interval of [C, D] is an interval of arriving at the egress of the UE; and in the downlink direction, the interval of [A, B] is an interval of arriving at the NW-TT, and the interval of [C, D] is an interval of arriving at the ingress of the RAN.

For example, if a sending sequence of the service #1 is before a sending sequence of a service #2, the SMF determines that a sending sequence of the QoS flow #1 is before a sending sequence of a QoS flow #2. The service #2 corresponds to the QoS flow #2.

For example, if an adjustment granularity of an arrival time point of the data packet of the service #1 is at a microsecond level, the SMF determines that an adjustment granularity of an arrival time point of the data packet in the QoS flow #1 is also at the microsecond level.

The target arrival time point of the first data packet in the QoS flow #1 meets the preset requirement of the QoS flow #1, and a waiting delay corresponding to the target arrival time point of the first data packet in the QoS flow #1 is less than or equal to the preset threshold.

The following uses several examples to describe a manner in which the SMF determines the target arrival time point of the first data packet in the QoS flow #1.

### Example 1:

For example, in the downlink, as shown in FIG. 12, the requirement on the arrival time interval of the data packet in the QoS flow #1 is an interval of [a, b].

In a manner, the plurality of arrival time points of the first data packet in the QoS flow #1 are t1, t2, t3, t4, t5, and t6. Because t6 is not in the interval of [a, b], the SMF determines the target arrival time point of the first data packet in the QoS flow #1 from t1 to t5. If the preset threshold is one slot, and the SMF may determine, based on information that is about the air interface status (for example, an uplink-downlink slot configuration information) and that is obtained from the RAN, that waiting delays respectively corresponding to t3 to t5 each are greater than one slot, the SMF determines the target arrival time point of the first data packet in the QoS flow #1 from t1 and t2. For example, if a priority of t1 is higher than a priority of t2, the target arrival time point of the first data packet in the QoS flow #1 is t1.

In another manner, in S1004, waiting delays respectively corresponding to the plurality of arrival time points that are of the first data packet in the QoS flow #1 and that are determined by the RAN each are less than or equal to the preset threshold. For example, the plurality of arrival time points of the first data packet in the QoS flow #1 are t1, t2, and t6. Because t6 is not in the interval of [a, b], the SMF determines the target arrival time point of the first data packet in the QoS flow #1 from t1 and t2. For example, if a priority of t1 is higher than a priority of t2, the target arrival time point of the first data packet in the QoS flow #1 is t1.

### Example 2:

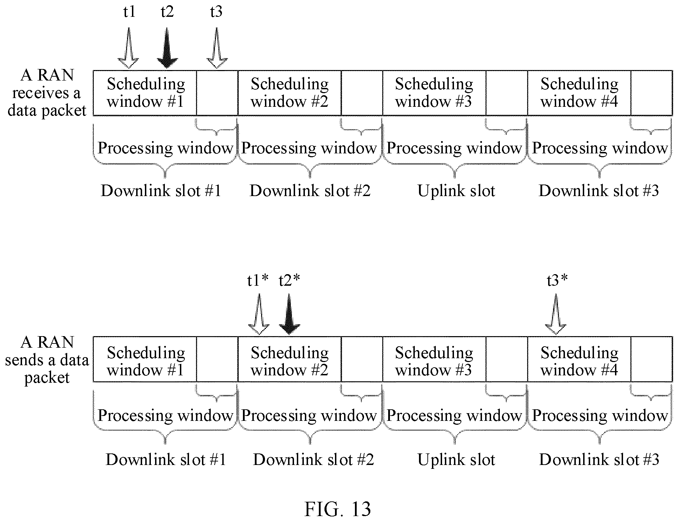

For example, in the downlink, as shown in FIG. 13, the plurality of arrival time points of the first data packet in the QoS flow #1 are t1 and t3, an arrival time point of a first data packet in the QoS flow #2 is t2, and a sending sequence of the QoS flow #1 is required to be before a sending sequence of the QoS flow #2.

It should be understood that t1 to t3 in FIG. 13 corresponds to t1* to t3* respectively.

Because t1* is before t2*, and t3* is after t2*, the target arrival time point is t1 instead of t3.

In addition, in another manner, the SMF may not determine the preset requirement of the QoS flow #1. Specifically, the SMF may determine the plurality of arrival time points of the first data packet of the service #1 based on the plurality of arrival time points of the first data packet in the QoS flow #1, and further determine a target arrival time point of the first data packet of the service #1 from the plurality of arrival time points of the first data packet of the service #1. The target arrival time point of the first data packet of the service #1 needs to meet the preset requirement of the service #1.

### Example 3:

The adjustment granularity of the arrival time point of the data packet in the QoS flow #1 is at the microsecond level.

The plurality of arrival time points of the first data packet in the QoS flow #1 are one absolute moment and a plurality of offsets (for example, an offset #1, an offset #2, and an offset #3) relative to the absolute moment. For example, the offset #1 is an offset backward by 2 microseconds, the offset #2 is an offset backward by 4 microseconds, and the offset #3 is an offset backward by 2 nanoseconds. Because the adjustment granularity is at the microsecond level, the SMF determines the target arrival time point from the absolute moment, the offset #1, and the offset #2.

The foregoing examples may be combined with each other. To be specific, the SMF may determine the target arrival time point of the first data packet in the QoS flow #1 in combination with the foregoing several manners.

S1007: The SMF determines the target arrival time point of the first data packet of the service #1 based on the target arrival time point of the first data packet in the QoS flow #1.

S1008: The SMF sends the identifier of the service #1 and the target arrival time point of the first data packet of the service #1 to the AF. Correspondingly, the AF receives the identifier of the service #1 and the target arrival time point of the first data packet of the service #1.

For example, the SMF may send a TSCAC to the AF, where the TSCAC includes the target arrival time point of the first data packet of the service #1.

S1009: The AF adjusts a sending time point of the first data packet of the service #1 based on the target arrival time point of the first data packet of the service #1.

For S1007 to S1009, refer to descriptions of S607 to S609 in FIG. 6.

According to the method in this application, the SMF determines the target arrival time point based on the preset requirement that is of the service and that is obtained from the AF and the plurality of arrival time points obtained from the RAN, where the target arrival time point meets the preset requirement of the service, and a waiting delay corresponding to the target arrival time point is less than or equal to the preset threshold. Further, the AF adjusts the sending time point of the data packet based on the target arrival time point. Therefore, according to the method in this application, a queuing delay of a data packet at the RAN or the UE can be reduced.

According to another aspect, if the AF provides only one arrival time point each time, a plurality of times of negotiation may need to be performed between the AF, the RAN, and a scheduling coordinator (for example, the SMF), to determine a proper target arrival time point. In comparison, in this application, because the AF provides the preset requirement of the service, and the RAN provides the plurality of arrival time points, so that the plurality of times of negotiation between the AF, the UPF, the RAN, and the scheduling coordinator can be avoided. This reduces signaling overheads, reduces time consumed for determining the target arrival time point, and improves communications efficiency.

FIG. 14 is a method according to this application, where the method includes the following steps.

S1401: An AF sends an identifier of a service #1 and a preset requirement of the service #1 to an SMF. Correspondingly, the SMF receives the identifier of the service #1 and the preset requirement of the service #1.

The preset requirement of the service #1 includes but is not limited to one or more of the following:
a requirement on an arrival time interval of a data packet of the service #1, a requirement on a sending sequence of the service #1, and a requirement on an adjustment granularity of an arrival time point of the data packet of the service #1.

For example, the AF further sends a preferential arrival time point of a first data packet of the service #1 to the SMF.

It should be understood that, in a downlink direction, the preferential arrival time point of the first data packet of the service #1 is a preferential time point of arriving at an NW-TT; and in an uplink direction, the preferential arrival time point of the first data packet of the service #1 is a preferential time point of arriving at a DS-TT.

For the preset requirement of the service #1, refer to the description in S601.

For example, the AF may directly send information to the SMF; or the AF may send information to a PCF, and the PCF send the information to the SMF. This is not limited.

For example, the AF may send a TSCAC to the SMF, where the TSCAC includes the preset requirement of the service #1. For example, the TSCSAC further includes the preferential arrival time point of the first data packet of the service #1.

S1402: The SMF determines a preset requirement of a QoS flow #1 based on the preset requirement of the service #1.

For example, the SMF may further determine a preferential arrival time point of a first data packet in the QoS flow #1 based on the preferential arrival time point of the first data packet of the service #1. For the process, refer to the description in S1002.

For description in which the SMF determines the preset requirement of the QoS flow #1 based on the preset requirement of the service #1, refer to the description in S1006.

S1403: The SMF sends an identifier of the QoS flow #1 and the preset requirement of the QoS flow #1 to a RAN. Correspondingly, the RAN receives the identifier of the QoS flow #1 and the preset requirement of the QoS flow #1.

For example, the SMF may further send the preferential arrival time point of the first data packet in the QoS flow #1 to the RAN.

For example, the SMF may send a TSCAI to the RAN, where the TSCAI includes the preset requirement of the QoS flow #1. For example, the TSCAI further includes the preferential arrival time point of the first data packet in the QoS flow #1.

S1404: The RAN determines a target arrival time point of the first data packet in the QoS flow #1. The target arrival time point of the first data packet in the QoS flow #1 meets the preset requirement of the QoS flow #1.

In a manner, in S1403, the SMF sends the preferential arrival time point of the first data packet in the QoS flow #1 to the RAN, and when a waiting delay corresponding to the preferential time point of the first data packet in the QoS flow #1 is greater than a preset threshold, the RAN needs to continue to determine the target arrival time point of the first data packet in the QoS flow #1.

In another manner, in S1403, the SMF does not send the preferential arrival time point of the first data packet in the QoS flow #1 to the RAN. For example, in S1403, the SMF may send indication information #B to the RAN, where the indication information #B indicates the RAN to perform an action in S1404. Alternatively, for example, the RAN may determine, based on the identifier of the QoS flow #1, a network slice corresponding to the QoS flow #1, and if a target arrival time point of a first data packet of a service in the network slice that needs to be determined is preconfigured in the RAN, the SMF performs the action in S1404.

For example, a waiting delay corresponding to the target arrival time point of the first data packet in the QoS flow #1 is less than or equal to the preset threshold.

In a manner, the RAN may determine an available slot based on an air interface status. Further, the RAN determines the target arrival time point of the first data packet in the QoS flow #1 based on the available slot.

The following uses several examples to describe a manner in which the RAN determines the target arrival time point of the first data packet in the QoS flow #1.

### Example 1:

A requirement on an arrival time interval of a data packet in the QoS flow #1 is an interval of [a, b]. The RAN determines the target arrival time point of the first data packet in the QoS flow #1 based on the interval of [a, b] and the available slot.

For example, the waiting delay corresponding to the target arrival time point is less than or equal to the preset threshold.

### Example 2:

A sending sequence of the QoS flow #1 is before a sending sequence of the QoS flow #2, and the RAN determines the target arrival time point of the first data packet in the QoS flow #1 based on a sending sequence of the QoS flow #1 and the QoS flow #2 and the available slot.

For example, the waiting delay corresponding to the target arrival time point is less than or equal to the preset threshold.

It should be understood that the sending sequence of the QoS flow may be an absolute sequence, and may be represented using a parameter (for example, a parameter B). For example, if a parameter B of the QoS flow #1 is equal to 1, and a parameter B of the QoS flow #2 is equal to 2, the sending sequence of the QoS flow #1 is before the sending sequence of the QoS flow #2.

Alternatively, the sending sequence of the QoS flow may be a relative sequence.

### Example 3:

An adjustment granularity of an arrival time point of a data packet in the QoS flow #1 is at a microsecond level. The RAN determines the target arrival time point of the first data packet in the QoS flow #1 based on the adjustment granularity and the available slot. For example, the target arrival time point of the first data packet in the QoS flow #1 is a time point obtained by adjusting the preferential arrival time point of the first data packet in the QoS flow #1 backward by 2 microseconds. The RAN does not determine the target arrival time point of the first data packet in the QoS flow #1 based on a coarser adjustment granularity (for example, at a millisecond level) of a time point or based on a finer adjustment granularity (for example, at a nanosecond level) of a time point.

The foregoing examples may be combined with each other. To be specific, the RAN may determine the target arrival time point of the first data packet in the QoS flow #1 in combination with the foregoing several manners.

S1405: The RAN sends the identifier of the QoS flow #1 and the target arrival time point of the first data packet in the QoS flow #1 to the SMF. Correspondingly, the SMF receives the identifier of the QoS flow #1 and the target arrival time point of the first data packet in the QoS flow #1.

For example, the RAN may send a TSCAI to the SMF, where the TSCAI includes the target arrival time point of the first data packet in the QoS flow #1.

S1406: The SMF determines a target arrival time point of the first data packet of the service #1 based on the target arrival time point of the first data packet in the QoS flow #1.

S1407: The SMF sends the identifier of the service #1 and the target arrival time point of the first data packet of the service #1 to the AF. Correspondingly, the AF receives the identifier of the service #1 and the target arrival time point of the first data packet of the service #1.

For example, the SMF may send a TSCAC to the AF, where the TSCAC includes the target arrival time point of the first data packet of the service #1.

S1408: The AF adjusts a sending time point of the first data packet of the service #1 based on the target arrival time point of the first data packet of the service #1.

For S1406 to S1408, refer to descriptions of S607 to S609 in FIG. 6.

According to the method in this application, the RAN obtains the preset requirement of the QoS flow, and determines the target arrival time point of the first data packet in the QoS flow. The target arrival time point meets the preset requirement of the QoS flow, and the waiting delay corresponding to the target arrival time point is less than or equal to the preset threshold. Further, the AF adjusts the sending time point of the first data packet based on the target arrival time point. Therefore, according to the method in this application, a queuing delay of the first data packet at the RAN or the UE can be reduced.

According to another aspect, if the AF provides only one arrival time point each time, a plurality of times of negotiation may need to be performed between the AF, the RAN, and a scheduling coordinator (for example, the SMF), to determine a proper target arrival time point. In comparison, in this application, because the RAN considers the preset requirement of the QoS flow when determining the target arrival time point, a plurality of times of negotiation between the AF, a UPF, the RAN, and the scheduling coordinator can be avoided. This reduces signaling overheads, reduces time consumed for determining the target arrival time point, and improves communications efficiency.

In the solutions of the foregoing embodiments, the target arrival time point of the first data packet of the service #1 is determined based on the target arrival time point of the first data packet in the QoS flow #1, and the sending time point of the first data packet of the service is further adjusted based on the target arrival time point of the first data packet of the service #1, to reduce the queuing delay of the first data packet at the RAN or the UE. Optionally, in another manner, another parameter (for example, a periodicity parameter) in the TSCAI/TSCAC may be adjusted to reduce a queuing delay of the first data packet at the RAN or the UE.

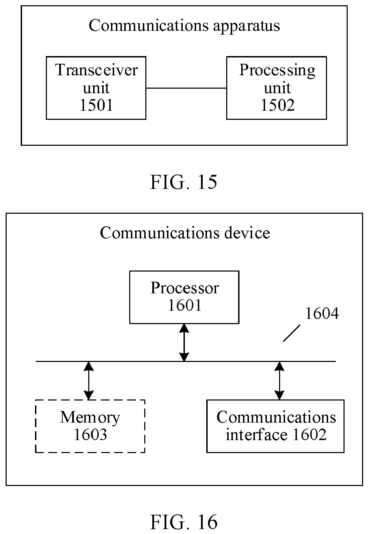

According to the foregoing method, FIG. 15 is a communications apparatus according to an embodiment of this application, where the communications apparatus includes a transceiver unit 1501 and a processing unit 1502.

The transceiver unit 1501 may be configured to implement a corresponding function of receiving and sending information. The transceiver unit 1501 may also be referred to as a communications interface or a communications unit. The processing unit 1502 is configured to perform a processing operation.

For example, the apparatus further includes a storage unit, where the storage unit may be configured to store instructions and/or data. The processing unit 1502 may read the instructions and/or the data in the storage unit, to enable the apparatus to implement actions of the apparatus in the foregoing method embodiments.

In a first implementation, the apparatus may be the RAN network element in the foregoing embodiments, or may be a component (for example, a chip) of the RAN network element in the foregoing embodiments. The transceiver unit is configured to implement S604 and S606; or configured to implement S 1003 and S 1005; or configured to implement S 1403 and S1405. The processing unit is configured to implement S605; or configured to implement S 1004; or configured to implement S1404.

In a second implementation, the apparatus may be the SMF network element in the foregoing embodiments, or may be a component (for example, a chip) of the SMF network element in the foregoing embodiments. The transceiver unit is configured to implement S602, S604, S606, and S608; or configured to implement S1001, S1003, S1005, and S1008; or configured to implement S1401, S1403, S1405, and S1407. The processing unit is configured to implement S603 and S607; or configured to implement S 1002, S 1006, and S 1007; or configured to implement S1402 and S 1406.

In a third implementation, the apparatus may be the AF network element or the TSCTSF network element in the foregoing embodiments, or may be a component (for example, a chip) of the AF network element or the TSCTSF network element in the foregoing embodiments. The transceiver unit is configured to implement S602 and S608; or configured to implement S 1001 and S1008; or configured to implement S1401 and S1407. The processing unit is configured to implement S601 and S609; or configured to implement S1009; or configured to implement S 1408.

It should be understood that, a specific process in which each unit performs the foregoing corresponding step has been described in detail in the foregoing method embodiments. For brevity, details are not described herein.

It should also be understood that the apparatus herein is embodied in a form of a functional unit. The term "unit" herein may refer to an application-specific integrated circuit (application-specific integrated circuit, ASIC), an electronic circuit, a processor (for example, a shared processor, a dedicated processor, or a processor group) configured to execute one or more software or firmware programs, a memory, a combined logic circuit, and/or another appropriate component supporting the described functions. In an optional example, a person skilled in the art may understand that the apparatus may be specifically the first network element in the foregoing embodiments, and may be configured to perform procedures and/or steps corresponding to the first network element in the foregoing method embodiments; or the apparatus may be specifically the network management network element in the foregoing embodiments, and may be configured to perform procedures and/or steps corresponding to the network management network element in the foregoing method embodiments. To avoid repetition, details are not described herein.

The communications apparatus has a function of implementing corresponding steps performed by the apparatus in the foregoing method. The function may be implemented by hardware, or may be implemented by executing corresponding software by hardware. The hardware or software includes one or more modules corresponding to the foregoing functions. For example, the transceiver unit may be replaced by a transceiver (for example, a sending unit in the transceiver unit may be replaced by a sender, and a receiving unit in the transceiver unit may be replaced by a receiver), and another unit such as a processing unit may be replaced by a processor, to separately perform sending and receiving operations and a related processing operation in the method embodiments.

In addition, the transceiver unit 1501 may be a transceiver circuit (for example, may include a receiver circuit and a sender circuit), and the processing unit may be a processing circuit.

It should be noted that, the apparatus in FIG. 15 may be the apparatus in the foregoing method embodiments, or may be a chip or a chip system, for example, a system on chip (system on chip, SoC). The transceiver unit may be an input/output circuit or a communications interface. The processing unit is a processor, a microprocessor, or an integrated circuit integrated on the chip. This is not limited herein.

An embodiment of this application further provides a communications device, as shown in FIG. 16, including: a processor 1601 and a communications interface 1602. The processor 1601 is configured to execute a computer program or instructions stored in a memory 1603, or read data stored in the memory 1603, to perform the method in the foregoing method embodiments. For example, there are one or more processors 1601. The communications interface 1602 is configured to receive and/or send a signal. For example, the processor 1601 is configured to control the communications interface 1602 to receive and/or send the signal.

For example, as shown in FIG. 16, the communications device further includes the memory 1603, where the memory 1603 is configured to store the computer program or the instructions and/or the data. The memory 1603 may be integrated with the processor 1601, or may be disposed separately. For example, there are one or more memories 1603.

For example, the processor 1601, the communications interface 1602, and the memory 1603 are connected to each other through a bus 1604. The bus 1604 may be a peripheral component interconnect (peripheral component interconnect, PCI) bus, an extended industry standard architecture (extended industry standard architecture, EISA) bus, or the like. The bus 1604 may be classified into an address bus, a data bus, a control bus, and the like. For ease of representation, only one thick line is used for representing the bus in FIG. 16, but this does not mean that there is only one bus or only one type of bus.

For example, the processor 1601 is configured to execute the computer program or the instruction stored in the memory 1603, to implement related operations of the RAN network element, the SMF network element, or the AF network element in the foregoing method embodiments.

In a first implementation, the device may be the RAN network element in the foregoing embodiments, or may be a component (for example, a chip) of the RAN network element in the foregoing embodiments. The communications interface is configured to implement S604 and S606; or configured to implement S 1003 and S 1005; or configured to implement S 1403 and S1405. The processor is configured to implement S605; or configured to implement S1004; or configured to implement S1404.

In a second implementation, the device may be the SMF network element in the foregoing embodiments, or may be a component (for example, a chip) of the SMF network element in the foregoing embodiments. The communications interface is configured to implement S602, S604, S606, and S608; or configured to implement S1001, S1003, S1005, and S1008; or configured to implement S1401, S1403, S1405, and S1407. The processor is configured to implement S603 and S607; or configured to implement S1002, S1006, and S1007; or configured to implement S1402 and S1406.

In a third implementation, the device may be the AF network element or the TSCTSF network element in the foregoing embodiments, or may be a component (for example, a chip) of the AF network element or the TSCTSF network element in the foregoing embodiments. The communications interface is configured to implement S602 and S608; or configured to implement S 1001 and S 1008; or configured to implement S1401 and S1407. The processor is configured to implement S601 and S609; or configured to implement S1009; or configured to implement S 1408.

It should be understood that the processor (for example, the processor 1601) mentioned in embodiments of this application may be a central processing unit (central processing unit, CPU), a network processor (network processor, NP), or a combination of a CPU and an NP. The processor may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable logic gate array (field programmable gate array, FPGA), a generic array logic (generic array logic, GAL), or any combination thereof.

It should be further understood that, the memory (for example, the memory 1603) mentioned in embodiments of this application may be a volatile memory or a non-volatile memory, or may include both the volatile memory and the non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), which is used as an external cache.

A person of ordinary skill in the art may be aware that, in combination with the examples described in embodiments disclosed in this specification, units and algorithm steps may be implemented by electronic hardware or a combination of computer software and electronic hardware. Whether these functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief descriptions, for a detailed working process of the foregoing system, apparatus, and unit, refer to a corresponding process in the foregoing method embodiments. Details are not described herein.

In several embodiments of this application, it should be understood that the disclosed system, apparatus, and method may be implemented in another manner. For example, the described apparatus embodiments are merely examples. For example, division into the units is merely logical function division and may be another division manner during actual implementation. For example, a plurality of units or components may be combined or integrated into another system, or some features may be ignored, or not performed. In addition, the displayed or discussed mutual couplings, direct couplings, or communications connections may be implemented using some interfaces. Indirect couplings or communications connections between the apparatuses or units may be implemented in electrical, mechanical, or another form.

The units described as separate parts may or may not be physically separate, and parts displayed as units may or may not be physical units, in other words, may be located in one position, or may be distributed on a plurality of network units. Some or all of the units may be selected based on an actual requirement to achieve objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the method in embodiments of this application. The foregoing storage medium includes any medium such as a USB flash drive, a removable hard disk, a read-only memory (Read-Only Memory, ROM), a random access memory (Random Access Memory, RAM), a magnetic disk, or an optical disc that can store program code.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communications method, comprising:
receiving, by an access network device, information about a plurality of first arrival time points of a first data packet in a quality of service QoS flow from a session management network element, wherein
in a downlink direction, the plurality of first arrival time points are a plurality of time points at which the first data packet arrives at an ingress of the access network device; and in an uplink direction, the plurality of first arrival time points are a plurality of time points at which the first data packet arrives at an egress of a terminal device;
determining, by the access network device, a target arrival time point based on the information about the plurality of first arrival time points; and
sending, by the access network device, the target arrival time point.

2. The method according to claim 1, wherein
the plurality of first arrival time points correspond to a plurality of second arrival time points of a first data packet of a service, the QoS flow corresponds to the service, the plurality of second arrival time points meet a preset requirement of the service, and the preset requirement comprises one or more of the following:
a requirement on an arrival time interval of a data packet of the service, a requirement on a sending sequence of the service, and a requirement on an adjustment granularity of an arrival time point of the data packet of the service.

3. The method according to claim 1 or 2, wherein
a waiting delay corresponding to the target arrival time point is less than or equal to a preset threshold; in the uplink direction, the waiting delay corresponding to the target arrival time point is a waiting delay at the terminal device; and in the downlink direction, the waiting delay corresponding to the target arrival time point is a waiting delay at the access network device.

4. The method according to any one of claims 1 to 3, wherein
the target arrival time point is a time point with a smallest waiting delay in the plurality of first arrival time points.

5. The method according to any one of claims 1 to 3, wherein
the plurality of first arrival time points comprises a preferential arrival time point and at least one candidate arrival time point; a priority of the preferential arrival time point is higher than a priority of the at least one candidate arrival time point; and the determining, by the access network device, a target arrival time point comprises:
when a waiting delay corresponding to the preferential arrival time point is less than or equal to the preset threshold, determining, by the access network device, the preferential arrival time point as the target arrival time point; or
when a waiting delay corresponding to the preferential arrival time point is greater than the preset threshold, determining, by the access network device, the target arrival time point based on the at least one candidate arrival time point.

6. The method according to claim 5, wherein
the at least one candidate arrival time point has a priority sequence, and the determining, by the access network device, the target arrival time point based on the at least one candidate arrival time point comprises:
determining, by the access network device, the target arrival time point based on the priority sequence and the at least one candidate arrival time point.

7. The method according to claim 5, wherein
when the waiting delay corresponding to the preferential arrival time point is greater than the preset threshold, the target arrival time point is a time point with a smallest waiting delay in the at least one candidate arrival time point.

8. The method according to any one of claims 1 to 3, wherein
the information about the plurality of first arrival time points is information about an arrival time interval; and
the determining, by the access network device, a target arrival time point comprises:
determining, by the access network device, the target arrival time point based on the arrival time interval.

9. The method according to any one of claims 1 to 8, wherein
the determining, by the access network device, a target arrival time point comprises:
determining, by the access network device, the target arrival time point based on an air interface scheduling status.

10. A communications method, comprising:
determining, by an application function network element, information about a plurality of arrival time points of a first data packet of a service, wherein the plurality of arrival time points meet a preset requirement of the service, and the preset requirement comprises one or more of the following:
a requirement on an arrival time interval of a data packet of the service, a requirement on a sending sequence of the service, and a requirement on an adjustment granularity of an arrival time point of the data packet of the service; and
in a downlink direction, the plurality of arrival time points are a plurality of time points at which the first data packet arrives at a network-side time sensitive network translator NW-TT; and in an uplink direction, the plurality of arrival time points are a plurality of arrival time points at which the first data packet arrives at a device-side time sensitive network translator DS-TT;
sending, by the application function network element, identification information of the service and the information about the plurality of arrival time points;
receiving, by the application function network element, the identification information of the service and a target arrival time point that are from a session management network element, wherein the information about the plurality of arrival time points comprises the target arrival time point; and
adjusting, by the application function network element, a sending time point of the first data packet based on the target arrival time point.

11. The method according to claim 10, wherein
a waiting delay corresponding to the target arrival time point is less than or equal to a preset threshold; in the uplink direction, the waiting delay corresponding to the target arrival time point is a waiting delay at a terminal device; and in the downlink direction, the waiting delay corresponding to the target arrival time point is a waiting delay at an access network device.

12. The method according to claim 10 or 11, wherein
the plurality of arrival time points comprise a preferential arrival time point and at least one candidate arrival time point, and a priority of the preferential arrival time point is higher than a priority of the at least one candidate arrival time point.

13. The method according to claim 12, wherein
the at least one candidate arrival time point has a priority sequence.

14. The method according to claim 10 or 11, wherein
the information about the plurality of arrival time points is information about an arrival time interval.

15. A communications method, comprising:
receiving, by a session management network element, a preset requirement of a service from an application function network element, wherein the preset requirement of the service comprises one or more of the following:
a requirement on an arrival time interval of a data packet of the service, a requirement on a sending sequence of the service, and a requirement on an adjustment granularity of an arrival time point of the data packet of the service;
receiving, by the session management network element, a plurality of arrival time points of a first data packet in a quality of service QoS flow from an access network device, wherein the service corresponds to the QoS flow; and
determining, by the session management network element, a target arrival time point of the first data packet in the QoS flow based on the plurality of arrival time points and the preset requirement of the service.

16. The method according to claim 15, wherein
the target arrival time point of the first data packet in the QoS flow meets a preset requirement of the QoS flow, and the preset requirement of the QoS flow corresponds to the preset requirement of the service.

17. The method according to claim 15 or 16, wherein
a waiting delay corresponding to the target arrival time point of the first data packet in the QoS flow is less than or equal to a preset threshold; in an uplink direction, the waiting delay corresponding to the target arrival time point of the first data packet in the QoS flow is a waiting delay at a terminal device; and in a downlink direction, the waiting delay corresponding to the target arrival time point of the first data packet in the QoS flow is a waiting delay at the access network device.

18. The method according to any one of claims 15 to 17, wherein
the plurality of arrival time points have a priority sequence; and
the determining, by the session management network element, a target arrival time point of the first data packet in the QoS flow comprises:
determining, by the session management network element, the target arrival time point of the first data packet in the QoS flow based on the priority sequence.

19. The method according to any one of claims 15 to 18, wherein the method further comprises:
sending, by the session management network element, the identification information of the service and a target arrival time point of a first data packet of the service, wherein the target arrival time point of the first data packet in the QoS flow corresponds to the target arrival time point of the first data packet of the service.

20. A communications method, comprising:
receiving, by an access network device, a preset requirement of a quality of service QoS flow from a session management network element, wherein the preset requirement comprises one or more of the following:
a requirement on an arrival time interval of a data packet in the QoS flow, a requirement on a sending sequence of the QoS flow, and a requirement on an adjustment granularity of an arrival time point of the data packet in the QoS flow;
determining, by the access network device, a target arrival time point of a first data packet in the QoS flow, wherein the target arrival time point meets the preset requirement; and
sending, by the access network device, the target arrival time point.

21. The method according to claim 20, wherein
the method further comprises:
receiving, by the access network device, a preferential arrival time point of the first data packet in the QoS flow from the session management network element; in a downlink direction, the preferential arrival time point is a preferential time point of arriving at an ingress of the access network device; in an uplink direction, the preferential arrival time point is a preferential time point of arriving at an egress of a terminal device; and
the determining, by the access network device, a target arrival time point comprises:
when a waiting delay corresponding to the preferential arrival time point is greater than a preset threshold, determining, by the access network device, the target arrival time point, wherein a waiting delay corresponding to the target arrival time point is less than or equal to the preset threshold, and
in the uplink direction, the waiting delay corresponding to the preferential arrival time point and the waiting delay corresponding to the target arrival time point are waiting delays at the terminal device; and in the downlink direction, the waiting delay corresponding to the preferential arrival time point and the waiting delay corresponding to the target arrival time point are waiting delays at the access network device.

22. A communications apparatus, comprising a unit configured to perform the method according to any one of claims 1 to 21.

23. A communications device, comprising a communications interface and a processor, wherein the processor is configured to execute a computer program or instructions, to enable the communications device to perform the method according to any one of claims 1 to 21.

24. A computer-readable storage medium, comprising a computer program or instructions, wherein when the computer program or the instructions are run on a computer, the computer is enabled to perform the method according to any one of claims 1 to 21.

25. A computer program product, comprising instructions, wherein when the instructions are run on a computer, the computer is enabled to perform the method according to any one of claims 1 to 21.
